# EUROPEAN PATENT APPLICATION

(11) **EP 4 830 842 A1**
(43) Date of publication of application: **28.10.2026**
(21) Application number: 25846467.6
(22) Date of filing: 14.04.2025
(51) Int. Cl.: B05C 1/08, H01M 4/04, H01M 10/04

(54) **ELECTRODE SHEET PROCESSING DEVICE, BATTERY PROCESSING SYSTEM, ELECTRODE SHEET PROCESSING METHOD AND BATTERY**

(30) Priority: 29.07.2024 CN 202411025602
(71) Applicant: Contemporary Amperex Technology Co., Limited, Ningde, Fujian 352100 (CN)
(72) Inventor: LV, Jiaqi, Ningde, Fujian 352100 (CN); SHANG, Hongwu, Ningde, Fujian 352100 (CN)
(74) Representative: Kraus & Lederer PartGmbB
(86) International application number: PCT/CN2025/088805
(87) International publication number: WO 2026/026019

(57) **Abstract**

An electrode sheet processing device (100), a battery processing system (1000), an electrode sheet (2111) processing method, and a battery (2000). The electrode sheet processing device (100) comprises a glue application roller (10) and a driving mechanism, wherein the driving mechanism is configured to drive the glue application roller (10) to rotate, an outer peripheral wall of the adhesive coating roller (10) is configured to make contact with an electrode sheet (2111); and the outer peripheral wall of the glue application roller (10) comprises a glue application area (11) and a transition area (12) distributed in a circumferential direction, the glue application area (11) being provided with a glue groove (11111) for accommodating conductive glue, and the glue application area (11) being configured to allow the conductive adhesive to be roll-coated onto the electrode sheet (2111) when making contact with the electrode sheet (2111). The electrode sheet processing device can roll-coat the conductive glue onto a bent portion of the electrode sheet, thereby alleviating the problem of cracking at the bent portion.

## Description

### CROSS-REFERENCE TO RELATED APPLICATIONS

The present application claims priority to Chinese Patent Application No.202411025602.2, filed on July 29, 2024, with the China National Intellectual Property Administration, and entitled "ELECTRODE SHEET PROCESSING DEVICE, BATTERY PROCESSING SYSTEM, ELECTRODE SHEET PROCESSING METHOD, AND BATTERY", which is incorporated herein by reference in its entirety.

### TECHNICAL FIELD

The present application relates to the field of battery technology, and specifically to an electrode sheet processing device, a battery processing system, an electrode sheet processing method, and a battery.

### BACKGROUND

In related art, an electrode assembly is mainly formed by stacking and winding electrode sheets, such that the electrode sheet includes a flat portion in a flat configuration and a curved portion in a curved configuration. The curved configuration of the curved portion of the electrode sheet makes the electrode sheet prone to cracking at the curved portion, which impairs the performance of the electrode sheet in releasing and intercalating conductive ions such as lithium ions, thereby affecting the charge-discharge cycling of a battery cell and reducing the quality of the battery cell.

### SUMMARY

In view of the above problems, an objective of embodiments of the present application is to provide an electrode sheet processing device, a battery processing system, an electrode sheet processing method, and a battery, so as to alleviate the technical cracking problem of an electrode sheet.

The technical solution adopted in embodiments of the present application is as follows.

According to a first aspect, embodiments of the present application provide an electrode sheet processing device, including:
an adhesive coating roller, where an outer peripheral wall of the adhesive coating roller is configured to contact an electrode sheet; the outer peripheral wall of the adhesive coating roller includes an adhesive coating region and a transition region distributed along a circumferential direction, the adhesive coating region is provided with adhesive grooves configured to accommodate conductive adhesive, and the adhesive coating region is configured to enable the conductive adhesive to be roll-coated onto the electrode sheet when contacting the electrode sheet; and
a driving mechanism, configured to drive the adhesive coating roller to rotate.

In the electrode sheet processing device provided in the embodiments of the present application, the outer peripheral wall of the adhesive coating roller is configured to contact the electrode sheet, and is divided into an adhesive coating region and a transition region distributed along the circumferential direction. The adhesive coating region is provided with adhesive grooves configured to accommodate conductive adhesive. During processing of the electrode sheet, the driving mechanism can drive the adhesive coating roller to rotate such that the adhesive coating region contacts a curved portion of the electrode sheet and the conductive adhesive in the adhesive grooves of the adhesive coating region is roll-coated onto the curved portion. In this way, conductive adhesive can be roll-coated onto the curved portion, and the conductive adhesive can penetrate into the curved portion, thereby improving the bonding force and flexibility of the curved portion, and thus alleviating the cracking problem of the curved portion.

In some embodiments, the adhesive coating region is provided with an anilox pattern, and the anilox pattern defines a plurality of adhesive grooves.

By adopting the above technical solution, the plurality of adhesive grooves defined by the anilox pattern are configured to accommodate conductive adhesive. In this way, the anilox walls of the anilox pattern can limit the conductive adhesive in the adhesive grooves to a certain extent, thereby alleviating the problem that the conductive adhesive in the adhesive grooves is ejected during rotation of the adhesive coating roller, improving the adhesive coating effect on the curved portion, and alleviating the cracking problem of the curved portion.

In some embodiments, the electrode sheet processing device further includes a material storage bin configured to store the conductive adhesive, and at least part of the adhesive coating roller is located within the material storage bin such that the adhesive grooves pick up the conductive adhesive from the material storage bin.

In this way, the adhesive coating region can roll-coat conductive adhesive in the material storage bin onto the curved portion.

In addition, the arrangement of the material storage bin enables the adhesive coating roller to pick up conductive adhesive during rotation and roll-coat the conductive adhesive onto the curved portion of the electrode sheet, which can simplify the processing operation of the electrode sheet and improve the processing efficiency of the electrode sheet, so as to improve the processing efficiency of the battery.

In some embodiments, the adhesive coating roller is provided with a first side and a second side opposite to each other along a first direction, and the first direction intersects an axial direction of the adhesive coating roller. The adhesive coating roller is configured to contact the electrode sheet at the first side. At least part of the material storage bin is disposed at the second side. The electrode sheet processing device further includes a scraping member, and the scraping member is disposed on a path along which the outer peripheral wall of the adhesive coating roller rotates from the second side towards the first side, and is configured to abut against the outer peripheral wall of the adhesive coating roller. The adhesive coating roller is configured to rotate relative to the scraping member.

In this way, it is possible to alleviate the problem that the outer peripheral wall of the adhesive coating roller roll-coats conductive adhesive onto the curved portion and the flat portion of the electrode sheet, which would otherwise increase volume and weight of the electrode sheet, thereby helping to improve the energy density of the battery.

In some embodiments, the electrode sheet processing device further includes a pressing roller, an outer peripheral wall of the pressing roller and the outer peripheral wall of the adhesive coating roller are spaced apart to form a roll-coating gap for the electrode sheet to pass through, and the adhesive coating region is configured to cooperate with the pressing roller to roll-coat the conductive adhesive onto the electrode sheet passing through the roll-coating gap.

In this way, the roll-coating effect of the conductive adhesive onto the curved portion by the adhesive coating region can be improved, thereby alleviating the cracking problem of the electrode sheet.

In some embodiments, the adhesive coating region includes at least one set of adhesive coating portions, the adhesive grooves are disposed on the adhesive coating portion, and each set of adhesive coating portions extends along an axial direction of the adhesive coating roller;
when the adhesive coating portions are provided in a plurality of sets, the plurality of sets of adhesive coating portions are spaced apart along the circumferential direction.

By arranging each set of adhesive coating portions to extend along the axial direction, each set of adhesive coating portions may roll-coat conductive adhesive onto a relatively large area of the curved portion along its width direction, thereby better alleviating the cracking problem of the curved portion.

When the adhesive coating region includes a plurality of sets of adhesive coating portions, the cracking problem of the curved portion can be alleviated, and usage of conductive adhesive can be reduced, which helps to improve the energy density of the battery.

In some embodiments, the driving mechanism is configured to respectively adjust a rotation speed of the adhesive coating roller when the adhesive coating region contacts the electrode sheet and when the transition region contacts the electrode sheet.

Such an arrangement facilitates the transition region to contact the flat portion of the electrode sheet, and facilitates the adhesive coating region to contact the curved portion of the electrode sheet, so as to roll-coat conductive adhesive onto the curved portion.

In some embodiments, the adhesive coating region is configured to contact a curved portion of the electrode sheet, and the transition region is configured to contact a flat portion of the electrode sheet;
the adhesive coating roller includes one adhesive coating region and one transition region; and
in each rotation cycle of the adhesive coating roller, the adhesive coating region is configured to contact each curved portion; or, over a plurality of rotation cycles of the adhesive coating roller, the adhesive coating region is configured to sequentially contact a plurality of positions of the curved portion, and the transition region is further configured to contact partial positions of the curved portion.

By adopting the above technical solution, the adhesive coating region may roll-coat conductive adhesive onto each curved portion, so as to roll-coat the conductive adhesive onto a plurality of curved portions. Further, in some cases, the adhesive coating region can also roll-coat the conductive adhesive onto a plurality of positions of the curved portion.

In some embodiments, the adhesive coating region is configured to contact a curved portion of the electrode sheet, and the transition region is configured to contact a flat portion of the electrode sheet;
the adhesive coating roller includes a plurality of adhesive coating regions and a plurality of transition regions, and the adhesive coating regions and the transition regions are alternately distributed along the circumferential direction; and
in each rotation cycle of the adhesive coating roller, the plurality of adhesive coating regions are configured to respectively contact a plurality of curved portions; or, in each rotation cycle of the adhesive coating roller, the plurality of adhesive coating regions are configured to sequentially contact a plurality of positions of the curved portion, and the transition region is further configured to contact partial positions of the curved portion.

By adopting the above technical solution, the plurality of adhesive coating regions of the adhesive coating roller may cooperate to roll-coat conductive adhesive onto a plurality of curved portions. Further, in some cases, the plurality of adhesive coating regions of the adhesive coating roller may cooperate to roll-coat the conductive adhesive onto a plurality of positions of the curved portion.

In some embodiments, the electrode sheet processing device further includes a drying mechanism, and the drying mechanism is configured to dry the conductive adhesive on the electrode sheet.

With such an arrangement, the conductive adhesive may better penetrate into the curved portion, so as to improve the flexibility and bonding ability of the curved portion, thereby helping to alleviate the cracking problem of the curved portion.

According to a second aspect, embodiments of the present application provide a battery processing system, including an electrode sheet processing device.

By adopting the electrode sheet processing device involved above, the battery processing system provided in the embodiments of the present application may roll-coat conductive adhesive onto the curved portion of the electrode sheet. In this way, the conductive adhesive can penetrate into the curved portion, so as to improve the bonding force and flexibility of the curved portion, thereby alleviating the cracking problem of the curved portion and improving the reliability of the obtained battery.

In some embodiments, the battery processing system further includes:
a winding device, configured to wind the electrode sheet to form an electrode assembly; and
an assembly device, configured to assemble the electrode assembly into a battery.

By adopting the above technical solution, the electrode sheet processing device first roll-coats conductive adhesive onto the curved portion of the electrode sheet, then the winding device winds the electrode sheet roll-coated with conductive adhesive to form an electrode assembly, and then the assembly device assembles the electrode assembly to form a battery.

According to a third aspect, embodiments of the present application provide an electrode sheet processing method, applied to an electrode sheet processing device. The electrode sheet processing method includes:
driving, by a driving mechanism, an adhesive coating roller to rotate such that an adhesive coating region of an outer peripheral wall of the adhesive coating roller contacts a curved portion of an electrode sheet; and
driving, by the driving mechanism, the adhesive coating roller to rotate such that a transition region of the outer peripheral wall of the adhesive coating roller contacts a flat portion of the electrode sheet.

In the electrode sheet processing method provided in the embodiments of the present application, the adhesive coating region of the adhesive coating roller is driven to contact the curved portion of the electrode sheet during processing of the electrode sheet such that the adhesive coating region roll-coats conductive adhesive onto the curved portion. In this way, the conductive adhesive can penetrate into the curved portion, so as to improve the bonding force and flexibility of the curved portion, thereby alleviating the cracking problem of the curved portion and improving the reliability of the obtained battery.

In some embodiments, the adhesive coating roller includes one adhesive coating region and one transition region; and the driving, by the driving mechanism, the adhesive coating roller to rotate such that the adhesive coating region of the outer peripheral wall of the adhesive coating roller contacts the curved portion of the electrode sheet includes:
in each rotation cycle of the adhesive coating roller, driving, by the driving mechanism, the adhesive coating region to contact each curved portion.

In this way, in each rotation cycle of the adhesive coating roller, the adhesive coating region may contact each curved portion, so as to roll-coat conductive adhesive onto each curved portion such that the adhesive coating region of the adhesive coating roller may sequentially roll-coat conductive adhesive onto a plurality of curved portions of the electrode sheet.

In some embodiments, the adhesive coating roller includes one adhesive coating region and one transition region; and the driving, by the driving mechanism, the adhesive coating roller to rotate such that the adhesive coating region of the outer peripheral wall of the adhesive coating roller contacts the curved portion of the electrode sheet includes:
over a plurality of rotation cycles of the adhesive coating roller, driving, by the driving mechanism, the adhesive coating region to sequentially contact the plurality of positions of the curved portion;

The electrode sheet processing method further includes:
over a plurality of rotation cycles of the adhesive coating roller, driving, by the driving mechanism, the transition region to contact partial positions of the curved portion.

With such an arrangement, over a plurality of rotation cycles of the adhesive coating roller, the adhesive coating region may sequentially contact a plurality of positions of the curved portion, so as to intermittently roll-coat conductive adhesive onto a plurality of positions of the curved portion. In addition, the adhesive coating region may roll-coat conductive adhesive onto a plurality of curved portions.

In some embodiments, the adhesive coating roller includes a plurality of adhesive coating regions and a plurality of transition regions, and the adhesive coating regions and the transition regions are alternately distributed along the circumferential direction; and the driving, by the driving mechanism, the adhesive coating roller to rotate such that the adhesive coating region of the outer peripheral wall of the adhesive coating roller contacts the curved portion of the electrode sheet includes:
in each rotation cycle of the adhesive coating roller, driving, by the driving mechanism, the plurality of adhesive coating regions to respectively contact a plurality of curved portions.

With such an arrangement, in each rotation cycle of the adhesive coating roller, a plurality of adhesive coating regions may respectively contact a plurality of curved portions, so as to roll-coat conductive adhesive onto the plurality of curved portions. That is, the plurality of adhesive coating regions of the adhesive coating roller may cooperate to roll-coat conductive adhesive onto a plurality of curved portions.

In some embodiments, the adhesive coating roller includes a plurality of adhesive coating regions and a plurality of transition regions, and the adhesive coating regions and the transition regions are alternately distributed along the circumferential direction; and the driving, by the driving mechanism, the adhesive coating roller to rotate such that the adhesive coating region of the outer peripheral wall of the adhesive coating roller contacts the curved portion of the electrode sheet includes:
in each rotation cycle of the adhesive coating roller, driving, by the driving mechanism, the plurality of adhesive coating regions to sequentially contact a plurality of positions of the curved portion;

The electrode sheet processing method further includes:
in each rotation cycle of the adhesive coating roller, driving, by the driving mechanism, the transition region to contact partial positions of the curved portion.

With such an arrangement, in each rotation cycle of the adhesive coating roller, a plurality of adhesive coating regions may sequentially contact a plurality of positions of the curved portion, so as to roll-coat conductive adhesive onto a plurality of positions of the curved portion. That is, the plurality of adhesive coating regions of the adhesive coating roller may cooperate to roll-coat conductive adhesive onto a plurality of curved portions. In addition, the plurality of adhesive coating regions of the adhesive coating roller may cooperate to roll-coat conductive adhesive onto a plurality of positions of the curved portion.

In some embodiments, the driving, by the driving mechanism, the adhesive coating roller to rotate such that the adhesive coating region of the outer peripheral wall of the adhesive coating roller contacts the curved portion of the electrode sheet includes:
driving, by the driving mechanism, the adhesive coating roller to rotate such that the adhesive coating region contacts the curved portion, and a rotational linear speed of the adhesive coating roller is the same as a conveying speed of the curved portion.

In this way, during the process in which the curved portion contacts the adhesive coating region, the adhesive coating region may move synchronously with the curved portion, which facilitates the adhesive coating region to roll-coat conductive adhesive onto the curved portion of the electrode sheet, thereby improving the roll-coating effect of the conductive adhesive onto the curved portion by the adhesive coating region, so as to alleviate the cracking problem of the curved portion.

In some embodiments, after driving, by the driving mechanism, the adhesive coating roller to rotate such that the adhesive coating region of the outer peripheral wall of the adhesive coating roller contacts the curved portion of the electrode sheet, and before driving, by the driving mechanism, the adhesive coating roller to rotate such that the transition region of the outer peripheral wall of the adhesive coating roller contacts the flat portion of the electrode sheet, the method further includes:
driving, by the driving mechanism, the adhesive coating region to contact part of the flat portion.

With such an arrangement, both the connection position between the curved portion and the flat portion, and the curved portion can be roll-coated with conductive adhesive by the adhesive coating region, thereby effectively alleviating the cracking problem of electrode sheet.

In some embodiments, the driving, by the driving mechanism, the adhesive coating roller to rotate such that the adhesive coating region of the outer peripheral wall of the adhesive coating roller contacts the curved portion of the electrode sheet includes:
driving, by the driving mechanism, the adhesive coating region to contact 3 to 5 curved portions in a portion of the electrode sheet corresponding to each electrode assembly.

By adopting the above technical solution, the first to third curved portions, or the first to fourth curved portions, or the first to fifth curved portions of the electrode sheet of the electrode assembly can be roll-coated with conductive adhesive, thereby alleviating the cracking problem of electrode sheet and improving the reliability of the battery.

According to a fourth aspect, embodiments of the present application provide a battery, including an electrode sheet, where the electrode sheet is obtained by processing using an electrode sheet processing device or an electrode sheet processing method; and the electrode sheet includes a flat portion and a curved portion connected to the flat portion, where the curved portion is in a curved configuration, and the curved portion is provided with conductive adhesive.

In the battery provided in embodiments of the present application, the provision of conductive adhesive on the electrode sheet can effectively alleviate the cracking problem of electrode sheet of the battery, thereby improving the reliability of the battery.

The above description is merely an overview of the technical solution of the present application. In order to more clearly understand the technical means of the embodiments of the present application and to implement them in accordance with the content of the specification, and to make the above and other objects, features, and advantages of the embodiments of the present application more obvious and easier to understand, specific implementations of the present application are set forth below in detail.

### BRIEF DESCRIPTION OF DRAWINGS

In order to more clearly illustrate the technical solution in the embodiments of the present application, the accompanying drawings required for the following embodiments or exemplary technical descriptions will be briefly described below. Apparently, the accompanying drawings in the following description are merely some embodiments of the present application, and for those skilled in the art, other accompanying drawings can be obtained based on these accompanying drawings without creative efforts.
FIG. 1 is an exploded schematic diagram of a battery according to some embodiments of the present application;
FIG. 2 is a schematic diagram of an electrode assembly of a battery according to some embodiments of the present application;
FIG. 3 is an unfolded schematic diagram of an electrode sheet of the electrode assembly shown in FIG. 2;
FIG. 4 is a schematic diagram of a battery processing system according to some embodiments of the present application;
FIG. 5 is a three-dimensional structural diagram of an electrode sheet processing device in cooperation with an electrode sheet according to some embodiments of the present application;
FIG. 6 is a side view of FIG. 5;
FIG. 7 is a schematic diagram of an adhesive coating roller of the electrode sheet processing device shown in FIG. 5;
FIG. 8 is a partial schematic diagram of an adhesive coating region of an electrode sheet processing device according to some embodiments of the present application;
FIG. 9 is a partial schematic diagram of an adhesive coating region of an electrode sheet processing device according to other embodiments of the present application;
FIG. 10 is a schematic diagram of an adhesive coating roller of an electrode sheet processing device according to still other embodiments of the present application;
FIG. 11 is a method flowchart of a battery processing method according to some embodiments of the present application;
FIG. 12 is a method flowchart of an electrode sheet processing method according to other embodiments of the present application;
FIG. 13 is a method flowchart of an electrode sheet processing method according to still other embodiments of the present application; and
FIG. 14 is a method flowchart of an electrode sheet processing method according to yet other embodiments of the present application.

The reference signs in the accompanying drawings are as follows:
1000. battery processing system; 100. electrode sheet processing device; 200. winding device; 300. assembly device; 10. adhesive coating roller; 101. first side; 102. second side; 103. roll-coating gap; 11. adhesive coating region; 111. adhesive coating portion; 1111. anilox pattern; 11111. adhesive groove; 11112. anilox wall; 12. transition region; 20. material storage bin; 201. opening; 30. scraping member; 40. pressing roller; 2000. battery; 2100. battery cell; 2110. electrode assembly; 2111. electrode sheet; 21111. curved portion; 21112. flat portion; 21113. adhesive layer; 2112. separator; 2200. enclosure; 2210. first part; 2220. second part; L. first axis; a. flat part; b. corner part; X. circumferential direction; Y. axial direction; Z. first direction.

### DESCRIPTION OF EMBODIMENTS

Embodiments of the present application are described in detail below, with examples thereof being shown in the accompanying drawings, where identical or similar reference numerals throughout represent identical or similar elements or elements with identical or similar functions. The embodiments described below with reference to the accompanying drawings are exemplary and intended to explain the present application, and should not be construed as limiting the present application.

Unless otherwise specified, all implementations and optional implementations of embodiments of the present application can be combined with each other to form new technical solutions.

Unless otherwise specified, all technical features and optional technical features of the embodiments of the present application can be combined with each other to form new technical solutions.

In the description of the embodiments of the present application, it should be understood that the orientation or positional relationship indicated by terms such as "length", "width", "upper", "lower", "front", "rear", "left", "right", "vertical", "horizontal", "top", "bottom", "inner", and "outer" are based on orientation or positional relationship shown in the accompanying drawings, only for the convenience of describing the present application and simplifying the description, rather than indicating or implying that the device or element referred to must have a specific orientation, or be constructed and operated in a specific orientation, and therefore should not be construed as limiting the present application.

In addition, the terms "first" and "second" are used for descriptive purposes only, and should not be construed as indicating or implying relative importance or implicitly indicating the number of indicated technical features. Thus, features defined by "first" and "second" may explicitly or implicitly include one or more of these features.

In the description of the embodiments of the present application, the meaning of "plurality" is two or more, unless otherwise clearly and specifically defined, "two or more" includes two. Accordingly, the meaning of "a plurality of sets" is two or more sets, including two sets.

In the description of the embodiments of the present application, unless otherwise clearly specified and defined, terms such as "mounting", "interconnection", "connection", and "fixation" should be understood in a broad sense. For example, it may be a fixed connection, or a detachable connection, or an integral connection; it may be a mechanical connection, or an electrical connection; it may be a direct connection, or an indirect connection through an intermediate medium, or it may be an internal communication between two elements or an interaction relationship between two elements. Those skilled in the art may understand specific meaning of the above terms in the present application according to specific circumstances.

In the description of the present application, the term "and/or" is only an associative relationship for describing associated objects, indicating that three relationships may be present. For example, A and/or B may indicate the following three cases: presence of only A, presence of both A and B, and presence of only B. In addition, the character "/" in the present application generally indicates an "or" relationship between the associated objects.

Although the present application has been described with reference to preferred embodiments, various modifications can be made thereto and components therein can be replaced with equivalents without departing from the scope of the present application. In particular, as long as there is no structural conflict, the technical features mentioned in the various embodiments can be combined in any way. The present application is not limited to the specific embodiments disclosed herein, but includes all technical solutions falling within the scope of the claims.

In related art, a battery may be a single physical module that includes one or more battery cells to provide higher voltage and capacity. When there are a plurality of battery cells, the plurality of battery cells are connected in series, parallel, or series-parallel through a busbar component, where being connected in series-parallel means that the plurality of battery cells are connected in both series and parallel.

A battery cell may include a housing assembly and an electrode assembly disposed within the housing assembly, where the electrode assembly is a component in the battery cell in which electrochemical reactions occur.

In some cases, the electrode assembly is mainly formed by stacking and winding a positive electrode sheet and a negative electrode sheet, and a separator is disposed between the positive electrode sheet and the negative electrode sheet, such that the electrode assembly includes a flat part and two corner parts, where the two corner parts are respectively arranged at opposite ends of the flat part. Specifically, the electrode sheet includes a plurality of flat portions in a flat configuration and a plurality of curved portions in a curved configuration, and each flat portion and each curved portion are alternately distributed along a length direction of the electrode sheet. The electrode sheet can include a positive electrode sheet, or can include a negative electrode sheet. The flat portion of the positive electrode sheet, the flat portion of the negative electrode sheet, and part of the separator constitute the flat part of the electrode assembly, and the curved portion of the positive electrode sheet, the curved portion of the negative electrode sheet, and part of the separator constitute the corner part of the electrode assembly.

However, due to the curved configuration of the curved portion of the electrode sheet, cracking is likely to occur at positions of the curved portion of the electrode sheet, especially at the position of the curved portion from the first fold to the fifth fold. This impairs the performance of the electrode sheet in releasing and embedding conductive ions such as lithium ions, thereby affecting the charge-discharge cycling of the battery cell and reducing the quality of the battery cell.

Based on the above considerations, embodiments of the present application provide an electrode sheet processing device, a battery processing system, an electrode sheet processing method, and a battery. An outer peripheral wall of an adhesive coating roller is configured to contact an electrode sheet, and is divided into an adhesive coating region and a transition region distributed along a circumferential direction. The adhesive coating region is provided with adhesive grooves configured to accommodate conductive adhesive, and the adhesive coating region is configured to enable the conductive adhesive in the adhesive grooves to be roll-coated onto the electrode sheet when contacting the electrode sheet. During processing of the electrode sheet, the driving mechanism may drive the adhesive coating roller to rotate such that the adhesive coating region contacts a curved portion of the electrode sheet and the conductive adhesive in the adhesive grooves the adhesive coating region is roll-coated onto the curved portion, and the driving mechanism may also drive the adhesive coating roller to rotate such that the transition region contacts the flat portion of the electrode sheet. In this way, conductive adhesive can be roll-coated onto the curved portion, and the conductive adhesive can penetrate into the curved portion, thereby improving the bonding force and flexibility of the curved portion and alleviating the cracking problem of the curved portion.

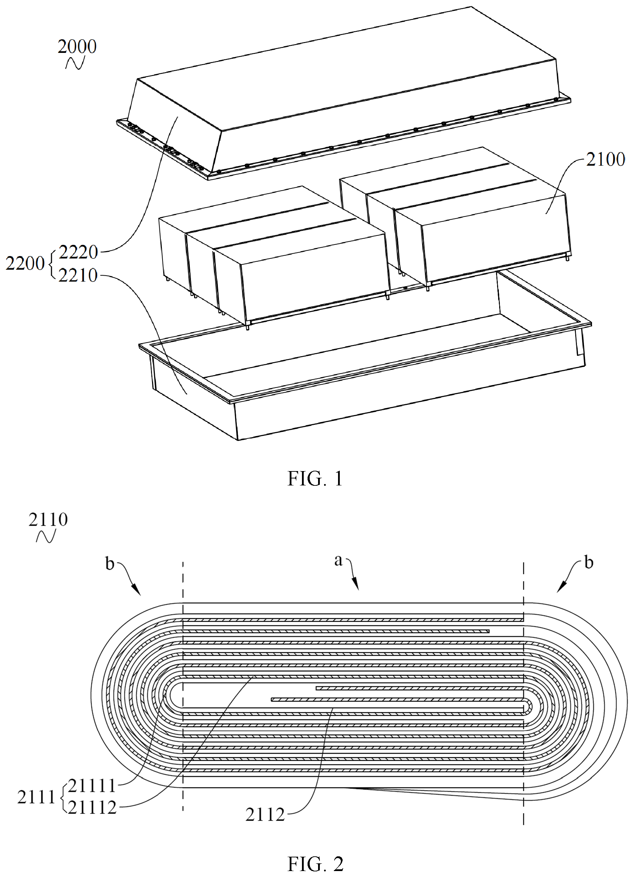

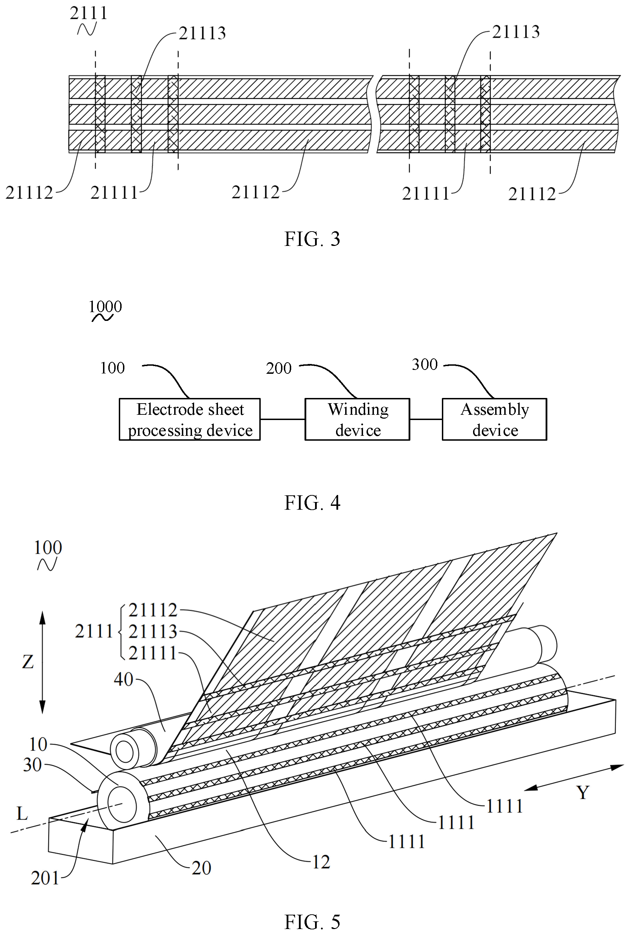

Reference is collectively made to FIG. 1 to FIG. 3. FIG. 1 is an exploded schematic diagram of a battery 2000 according to some embodiments of the present application; FIG. 2 is a schematic diagram of an electrode assembly 2110 of the battery 2000 according to some embodiments of the present application, and in FIG. 2, the flat part a and the corner part b of the electrode assembly 2110 are divided by dashed lines; and FIG. 3 is an unfolded schematic diagram of an electrode sheet 2111 of the electrode assembly 2110 shown in FIG. 2, and in FIG. 3, the curved portion 21111 and the flat portion 21112 of the electrode sheet 2111 are divided by dashed lines. The battery 2000 provided in the embodiments of the present application may include a battery cell 2100, and the battery cell 2100 includes one or more electrode assemblies 2110.

A battery cell 2100 refers to the smallest unit for storing and outputting electrical energy. The battery cell 2100 may be a secondary battery 2000 or a primary battery 2000. The battery cell 2100 may be, but is not limited to, a metal battery 2000, a lithium-sulfur battery 2000, a sodium-ion battery 2000, or a magnesium-ion battery 2000. The battery cell 2100 may be cylindrical, flat, rectangular, or of other shapes.

The electrode assembly 2110 is mainly formed by stacking and winding a positive electrode sheet and a negative electrode sheet, and a separator 2112 is disposed between the positive electrode sheet and the negative electrode sheet. The parts of the positive electrode sheet and the negative electrode sheet having active material constitute a main body of the electrode assembly 2110, and the parts of the positive electrode sheet and the negative electrode sheet without active material each constitute an electrode tab. The electrode tab of the positive electrode sheet is a positive electrode tab, and the electrode tab of the negative electrode sheet is a negative electrode tab. The positive electrode tab and the negative electrode tab may be located together at the same end of the main body or respectively located at opposite ends of the main body.

As shown in FIG. 2, the electrode assembly 2110 includes a flat part a and two corner parts b, where the two corner parts b are respectively disposed at opposite ends of the flat part a. As shown in FIG. 2 and FIG. 3, the electrode sheet 2111 includes a plurality of flat portions 21112 in a flat configuration and a plurality of curved portions 21111 in a curved configuration, and the flat portions 21112 and the curved portions 21111 are alternately distributed along a length direction of the electrode sheet 2111. The electrode sheet 2111 may include a positive electrode sheet or a negative electrode sheet. The flat portion 21112 of the positive electrode sheet, the flat portion 21112 of the negative electrode sheet, and part of the separator 2112 constitute the flat part a of the electrode assembly 2110, and the curved portion 21111 of the positive electrode sheet, the curved portion 21111 of the negative electrode sheet, and part of the separator 2112 constitute the corner part b of the electrode assembly 2110.

In some embodiments, the battery cell 2100 may further include an electrolyte, and the electrolyte functions to conduct ions between the positive electrode sheet and the negative electrode sheet. The electrolyte involved in embodiments of the present application may be in a liquid state, a gel state, or a solid state.

In some embodiments, the battery cell 2100 may further include a housing assembly, and the housing assembly is configured to define an internal environment of the battery cell 2100 and to accommodate the electrode assembly 2110 and the electrolyte.

The housing assembly may include a housing and an end cover, where the housing and the end cover are components configured to jointly define an internal environment of the battery cell 2100, and the internal environment defined by the housing and the end cover is configured to accommodate the electrode assembly 2110 and the electrolyte. The housing and the end cover may be independent components. Specifically, the housing is provided with an opening 201, and the end cover covers the opening 201 of the housing to jointly define the internal environment of the battery cell 2100 with the housing and isolate the internal environment of the battery cell 2100 from the external environment. Alternatively, the housing and the end cover may be of an integrated structure. Specifically, a common connection interface may be formed between the end cover and the housing before the electrode assembly 2110 is put into the housing. When the electrode assembly 2110 is put into the housing and needs to be sealed, the end cover covers the housing.

The number of end covers may be one. Or, the number of end covers may be two, and the two end covers are respectively disposed at opposite ends of the housing.

The housing may be cylindrical, square, or of other shapes, and may be specifically determined according to the specific shape and size of the electrode assembly 2110. In addition, the housing and the end cover may be made of various materials, such as copper, iron, aluminum, stainless steel, aluminum alloy, and plastic.

In some embodiments, the battery 2000 may be a battery module. When there are a plurality of battery cells 2100, the plurality of battery cells 2100 are arranged and fixed to form a battery module.

In some embodiments, as shown in FIG. 1, the battery 2000 may be a battery pack. Specifically, the battery 2000 further includes an enclosure 2200, and the enclosure 2200 is a structure with an internal space, and the internal space of the enclosure 2200 is configured to accommodate the battery cells 2100.

The enclosure 2200 may be of various structures. In some embodiments, the enclosure 2200 may include a first part 2210 and a second part 2220, the first part 2210 and the second part 2220 fit together with one covering the other to jointly define the internal space of the enclosure 2200. The first part 2210 may be a hollow structure with an opening 201 at one end, and the second part 2220 is a plate-like structure, and the second part 2220 covers the first part 2210 on the side of the opening 201, such that the first part 2210 and the second part 2220 jointly define the internal space of the enclosure 2200. Or, reference is made to FIG. 1. Both the first part 2210 and the second part 2220 may be hollow structures with an opening 201 at one end, and the opening 201 side of the first part 2210 covers the opening 201 side of the second part 2220, such that the first part 2210 and the second part 2220 jointly define the internal space of the enclosure 2200. The enclosure 2200 composed of the first part 2210 and the second part 2220 may be various shapes, such as cylindrical, rectangular, etc.

In some embodiments, as shown in FIG. 1, a plurality of battery cells 2100 may be connected in series, parallel, or series-parallel to form a whole, and then the whole formed by the plurality of battery cells 2100 is directly accommodated in the internal space of the enclosure 2200. In other embodiments, a plurality of battery cells 2100 may alternatively be first connected in series, parallel, or series-parallel, and arranged and fixed to form a battery module, and the battery module is accommodated in the internal space of the enclosure 2200. In still other embodiments, a plurality of battery cells 2100 may alternatively be first connected in series, parallel, or series-parallel, and arranged and fixed to form a plurality of battery modules, and the plurality of battery modules are then connected in series, parallel, or series-parallel to form a whole accommodated in the internal space of the enclosure 2200.

In an example, a plurality of battery cells 2100 may be fixed by cable ties or the like to form a battery module. In an example, a plurality of battery cells 2100 may alternatively be fixed by end plates, side plates or the like to form a battery module.

Reference is made to FIG. 4. FIG. 4 is a schematic diagram of a battery processing system 1000 according to some embodiments of the present application. The battery processing system 1000 provided in the embodiments of the present application refers to equipment used for processing to obtain a battery 2000.

The battery processing system 1000 may include an electrode sheet processing device 100.

The electrode sheet processing device 100 provided in embodiments of the present application refers to a device used for processing to obtain an electrode sheet 2111. Specifically, the electrode sheet processing device 100 is mainly configured to roll-coat conductive adhesive onto the curved portion 21111 of the electrode sheet 2111, so as to alleviate the cracking problem of the curved portion 21111 of the electrode sheet 2111.

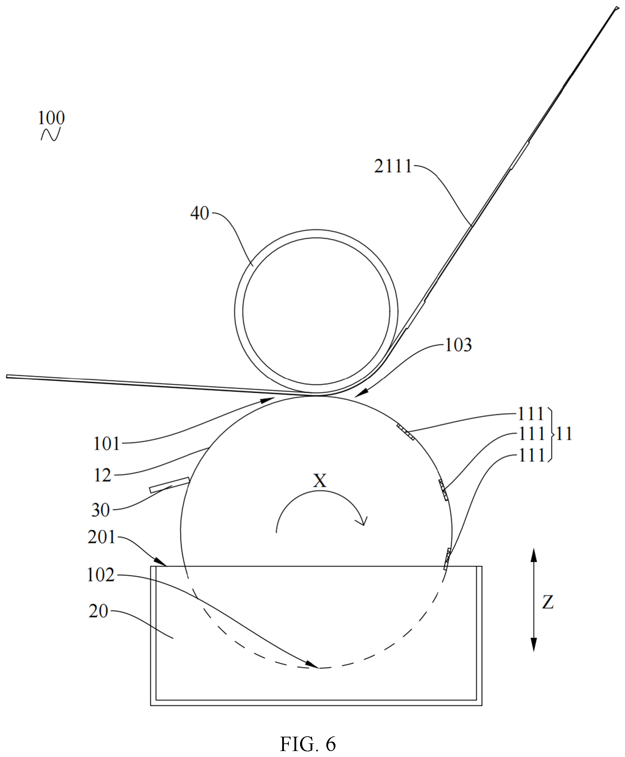

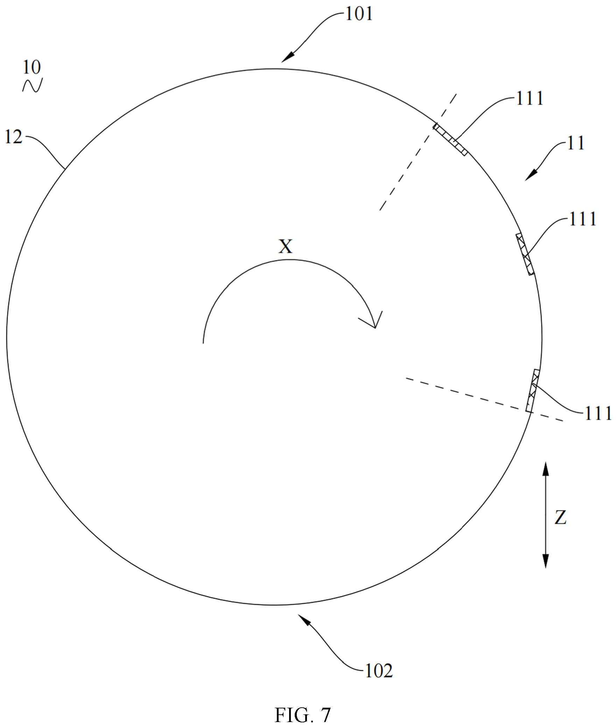

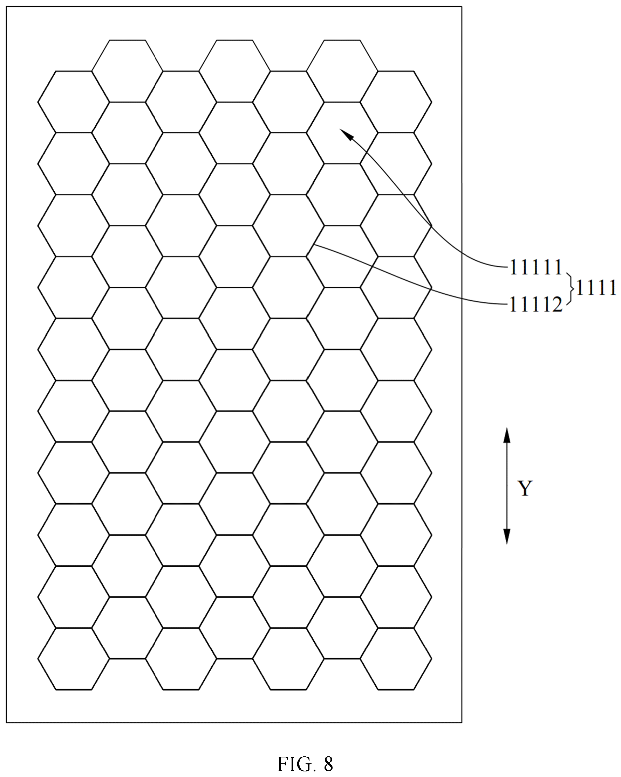

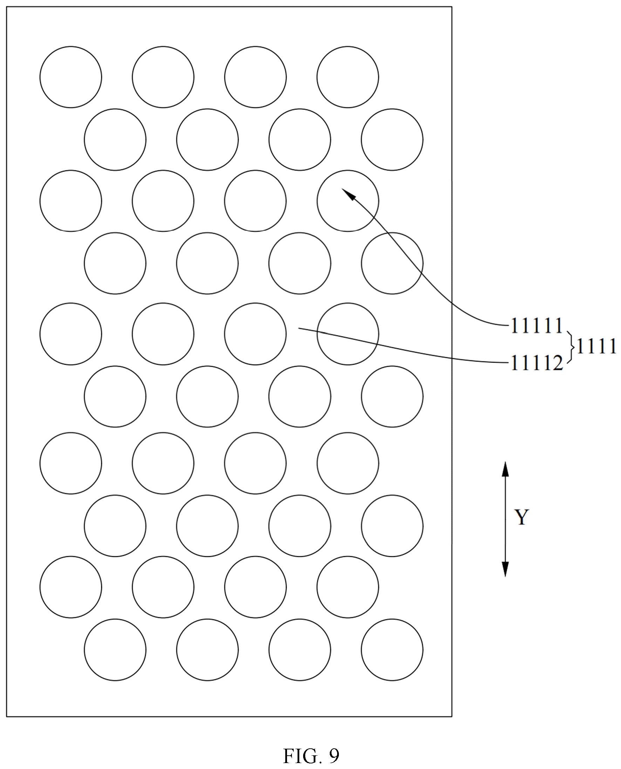

Reference is collectively made to FIG. 5 to FIG. 9 in conjunction with other accompanying drawings. FIG. 5 is a three-dimensional structural diagram of an electrode sheet processing device 100 in cooperation with an electrode sheet 2111 according to some embodiments of the present application. FIG. 6 is a side view of FIG. 5, specifically a schematic diagram of the electrode sheet processing device 100 and the electrode sheet 2111 on the axial direction Y of the adhesive coating roller 10. FIG. 7 is a schematic diagram of the adhesive coating roller 10 of the electrode sheet processing device 100 shown in FIG. 5, specifically a schematic diagram of the adhesive coating roller 10 on the axial direction Y. In FIG. 7, the adhesive coating region 11 and the transition region 12 of the adhesive coating roller 10 are separated by dashed lines. FIG. 8 is a partial schematic diagram of an adhesive coating region 11 of an electrode sheet processing device 100 according to some embodiments of the present application, and FIG. 9 is a partial schematic diagram of an adhesive coating region 11 of an electrode sheet processing device 100 according to other embodiments of the present application. The electrode sheet processing device 100 provided in the embodiments of the present application includes an adhesive coating roller 10 and a driving mechanism. An outer peripheral wall of the adhesive coating roller 10 is configured to contact an electrode sheet 2111. The outer peripheral wall of the adhesive coating roller 10 includes an adhesive coating region 11 and a transition region 12 distributed along a circumferential direction X. The adhesive coating region 11 is provided with adhesive grooves 11111, and the adhesive grooves 11111 are configured to accommodate conductive adhesive. The adhesive coating region 11 is configured to enable the conductive adhesive in the adhesive grooves 11111 to be roll-coated onto the electrode sheet 2111 when contacting the electrode sheet 2111. The driving mechanism is configured to drive the adhesive coating roller 10 to rotate.

The adhesive coating roller 10 is a roller-shaped structure of the electrode sheet processing device 100 configured to roll-coat conductive adhesive onto the electrode sheet 2111. The electrode sheet 2111 may be a positive electrode sheet or a negative electrode sheet.

The driving mechanism refers to a mechanism configured to drive the adhesive coating roller 10 to rotate. The driving mechanism may include a motor, or may include a mechanism where a motor and a gear set cooperate and the like.

It may be understood that the adhesive coating roller 10 is connected to an output end of the driving mechanism and can rotate under the drive of the driving mechanism. When the driving mechanism drives the adhesive coating roller 10 to rotate, the adhesive coating roller 10 may rotate around its own central axis. For ease of description, the central axis of the adhesive coating roller 10 is defined as a first axis L. The adhesive coating roller 10 being arranged to rotate means that the adhesive coating roller 10 is rotatable around the first axis L.

The outer peripheral wall of the adhesive coating roller 10 refers to the outer peripheral wall of the adhesive coating roller 10 around the first axis L. The outer peripheral wall of the adhesive coating roller 10 is a solid wall of the adhesive coating roller 10 and is generally cylindrical.

The extending direction of the first axis L is an axial direction Y of the adhesive coating roller 10. Hereinafter, for ease of description, the axial direction Y of the adhesive coating roller 10 is referred to simply as the axial direction Y.

A circumferential direction X refers to a circumferential direction, which is a surrounding direction of the outer peripheral wall of the adhesive coating roller 10 and is substantially perpendicular to the axial direction Y.

A radial direction refers to a direction along a radius of a circle defined by a cylindrical structure of the outer peripheral wall of the adhesive coating roller 10 and is substantially perpendicular to the axial direction Y.

It may be understood that the electrode sheet 2111 may pass through the adhesive coating roller 10 during conveyance, such that the outer peripheral wall of the adhesive coating roller 10 contacts the electrode sheet 2111.

In some possible designs, when the electrode sheet 2111 passes through the adhesive coating roller 10 during conveyance, the electrode sheet 2111 may be in line contact with the outer peripheral wall of the adhesive coating roller 10. Based on this, part of the electrode sheet 2111 in contact with the outer peripheral wall of the adhesive coating roller 10 may be conveyed along a tangential direction at a contact position between the adhesive coating roller 10 and the electrode sheet 2111. For example, when the electrode sheet 2111 passes through the adhesive coating roller 10, the electrode sheet 2111 is in a straight extended state and is tangentially arranged relative to the outer peripheral wall of the adhesive coating roller 10, such that the electrode sheet 2111 is in line contact with the outer peripheral wall of the adhesive coating roller 10.

In other possible designs, when the electrode sheet 2111 passes through the adhesive coating roller 10 during conveyance, the electrode sheet 2111 may be in surface contact with the outer peripheral wall of the adhesive coating roller 10. Specifically, the electrode sheet 2111 is in a curved state and surrounds the outer peripheral wall of the adhesive coating roller 10 so as to contact the outer peripheral wall of the adhesive coating roller 10, such that the electrode sheet 2111 is in surface contact with the outer peripheral wall of the adhesive coating roller 10. Based on this, part of the electrode sheet 2111 contacts the outer peripheral wall of the adhesive coating roller 10 may be conveyed along a circumferential direction at a contact position between the adhesive coating roller 10 and the electrode sheet 2111.

The adhesive coating region 11 and the transition region 12 are two regions of the outer peripheral wall of the adhesive coating roller 10, and may be specifically understood as two solid portions of the outer peripheral wall of the adhesive coating roller 10. When the outer peripheral wall of the adhesive coating roller 10 contacts the electrode sheet 2111, and the adhesive coating roller 10 rotates under the drive of the driving mechanism, the adhesive coating region 11 and the transition region 12 of the adhesive coating roller 10 may alternately contact the electrode sheet 2111.

The adhesive groove 11111 refers to a groove configured to accommodate conductive adhesive.

During operation of the electrode sheet processing device 100, the adhesive coating roller 10 may rotate under the drive of the driving mechanism such that the adhesive coating region 11 and the transition region 12 of the adhesive coating roller 10 alternately contact the electrode sheet 2111. When the adhesive coating region 11 contacts the electrode sheet 2111, the conductive adhesive in the adhesive grooves 11111 of the adhesive coating region 11 is roll-coated onto the electrode sheet 2111.

In practical applications, the adhesive coating region 11 may be configured to contact the curved portion 21111 of the electrode sheet 2111, so as to roll-coat the conductive adhesive in the adhesive grooves 11111 onto the curved portion 21111. The transition region 12 may be configured to contact the flat portion 21112 of the electrode sheet 2111, so as to transition the flat portion 21112 of the electrode sheet 2111, which facilitates the next curved portion 21111 of the electrode sheet 2111 to contact the adhesive coating region 11.

The adhesive coating region 11 being configured to contact the curved portion 21111 means that the adhesive coating region 11 is at least configured to contact the curved portion 21111, that is, at least part of the adhesive coating region 11 is configured to contact at least part of the curved portion 21111. The transition region 12 being configured to contact the flat portion 21112 means that the transition region 12 is at least configured to contact the flat portion 21112, that is, at least part of the transition region 12 is configured to contact at least part of the flat portion 21112.

It may be understood that, in some possible designs, in the curved portion 21111 and the flat portion 21112 of the electrode sheet 2111, the adhesive coating region 11 is only configured to contact the curved portion 21111 of the electrode sheet 2111, and does not contact the flat portion 21112 of the electrode sheet 2111, such that the conductive adhesive is only roll-coated onto the curved portion 21111. Based on this, the transition region 12 may be configured to only contact the flat portion 21112 of the electrode sheet 2111 without contacting the curved portion 21111, so as to transition only the flat portion 21112; or may be configured to contact the flat portion 21112 and a part of the curved portion 21111, so as to transition the flat portion 21112 and the part of the curved portion 21111.

In other possible designs, among the curved portion 21111 and the flat portion 21112 of the electrode sheet 2111, the adhesive coating region 11 may be configured to not only contact the curved portion 21111 of the electrode sheet 2111, but also contact part of the flat portion 21112 of the electrode sheet 2111, such that the conductive adhesive may be roll-coated onto the curved portion 21111 and the part of the flat portion 21112. For example, conductive adhesive may be roll-coated onto, for example but not limited to, the connection position between the curved portion 21111 and the flat portion 21112, and the curved portion 21111. Based on this, the transition region 12 may be configured to only contact part of the flat portion 21112, and does not contact the curved portion 21111, so as to only transition part of the flat portion 21112; or may be configured to contact part of the flat portion 21112 and a part of the curved portion 21111, so as to transition part of the flat portion 21112 and the part of the curved portion 21111.

During operation of the electrode sheet processing device 100, the adhesive coating roller 10 rotates around the first axis L under the drive of the driving mechanism, and the electrode sheet 2111 contacts the outer peripheral wall of the adhesive coating roller 10. By controlling the rotation speed of the adhesive coating roller 10 and the conveying speed of the electrode sheet 2111, at least part of a first flat portion 21112 of the electrode sheet 2111 can be made to contact the transition region 12 of the adhesive coating roller 10, such that the transition region 12 transitions at least part of the first flat portion 21112. Then, a first curved portion 21111 of the electrode sheet 2111 contacts the adhesive coating region 11 of the adhesive coating roller 10, such that the adhesive coating region 11 roll-coats conductive adhesive onto the first curved portion 21111. Next, at least part of a second flat portion 21112 of the electrode sheet 2111 contacts the transition region 12, such that the transition region 12 transitions at least part of the second flat portion 21112. Subsequently, a second curved portion 21111 of the electrode sheet 2111 contacts the adhesive coating region 11, such that the adhesive coating region 11 roll-coats conductive adhesive onto the second curved portion 21111, ......, and so on.

When the curved portion 21111 of the electrode sheet 2111 contacts the adhesive coating region 11 of the adhesive coating roller 10, the adhesive coating region 11 may roll-coat the conductive adhesive onto the surface of the curved portion 21111. When part of the flat portion 21112 of the electrode sheet 2111 contacts the adhesive coating region 11, the adhesive coating region 11 roll-coats the conductive adhesive onto the surface of the part of the flat portion 21112. When the flat portion 21112 of the electrode sheet 2111 contacts the transition region 12, the transition region 12 provides buffering transition for the flat portion 21112. When part of the curved portion 21111 of the electrode sheet 2111 contacts the transition region 12, the transition region 12 provides buffering transition for the part of the transition region 12.

Under the condition that the adhesive coating region 11 is configured to contact the curved portion 21111 and part of the flat portion 21112, so as to roll-coat conductive adhesive onto the curved portion 21111 and part of the flat portion 21112, during operation of the electrode sheet processing device 100, after the flat portion 21112 contacts the transition region 12 and before the curved portion 21111 contacts the adhesive coating region 11, part of the flat portion 21112 may contact the adhesive coating region 11, so as to roll-coat conductive adhesive through the adhesive coating region 11.

In controlling the rotation speed of the adhesive coating roller 10 and the conveying speed of the electrode sheet 2111, it is possible to control the rotation speed of the adhesive coating roller 10 only based on the conveying speed of the electrode sheet 2111, or to control the conveying speed of the electrode sheet 2111 only based on the rotation speed of the adhesive coating roller 10, or to control the rotation speed of the adhesive coating roller 10 and the conveying speed of the electrode sheet 2111 independently.

For ease of description, one side of the adhesive coating roller 10 along a first direction Z may be defined as a first side 101, and the adhesive coating roller 10 is configured to contact the electrode sheet 2111 at the first side 101, that is, during the conveying of the electrode sheet 2111, at least part of the electrode sheet 2111 is located at the first side 101 of the adhesive coating roller 10. By controlling the rotation speed of the adhesive coating roller 10 and the conveying speed of the electrode sheet 2111, when the electrode sheet 2111 is conveyed to the first side 101, the electrode sheet 2111 gradually comes into contact with the outer peripheral wall of the adhesive coating roller 10 at the first side 101 as the adhesive coating roller 10 rotates and the electrode sheet 2111 is conveyed.

The adhesive coating region 11 of the adhesive coating roller 10 is configured to contact the curved portion 21111 of the electrode sheet 2111 at the first side 101. Specifically, by controlling the rotation speed of the adhesive coating roller 10 and the conveying speed of the electrode sheet 2111, when the curved portion 21111 of the electrode sheet 2111 is conveyed to the first side 101, the adhesive coating region 11 of the outer peripheral wall of the adhesive coating roller 10 may also be rotated to the first side 101, such that the curved portion 21111 may gradually come into contact with the adhesive coating region 11 at the first side 101 as the adhesive coating roller 10 rotates and the electrode sheet 2111 is conveyed.

The transition region 12 of the adhesive coating roller 10 is configured to contact the flat portion 21112 of the electrode sheet 2111 at the first side 101. Specifically, when the flat portion 21112 of the electrode sheet 2111 is conveyed to the first side 101, the transition region 12 of the outer peripheral wall of the adhesive coating roller 10 may also be rotated to the first side 101, such that the flat portion 21112 may gradually come into contact with the transition region 12 at the first side 101 as the adhesive coating roller 10 rotates and the electrode sheet 2111 is conveyed.

The first side 101 refers to a position at which the adhesive coating roller 10 contacts the electrode sheet 2111, and may be a substantially virtual position that does not change with rotation of the adhesive coating roller 10. The first direction Z refers to the general direction of the adhesive coating roller 10 having the first side 101.

A rotation direction of the adhesive coating roller 10 at the first side 101 is substantially the same as a conveying direction of the electrode sheet 2111 at the first side 101. In an example, as shown in FIG. 5 to FIG. 7, the first side 101 is located at an upper side of the adhesive coating roller 10, and the rotation direction of the adhesive coating roller 10 is clockwise, such that the rotation direction of the adhesive coating roller 10 at the first side 101 is substantially rightward, and the conveying direction of the electrode sheet 2111 is substantially rightward.

The first direction Z intersects the axial direction Y of the adhesive coating roller 10, which means that an included angle greater than 0° and less than 180° may be formed between the first direction Z and the axial direction Y, that is, the first direction Z is not parallel to the axial direction Y. The first direction Z and the axial direction Y may be perpendicular or not perpendicular to each other. The first direction Z and the axial direction Y may be intersecting directions on a same plane, or directions on planes that are skew to each other, and a projection of the axial direction Y on the plane in which the first direction Z lies may intersect the first direction Z. In an example, the first direction Z is perpendicular to the axial direction Y, and the first direction Z is parallel to a radial direction of the adhesive coating roller 10.

In the electrode sheet processing device 100 provided in the embodiments of the present application, the outer peripheral wall of the adhesive coating roller 10 is configured to contact the electrode sheet 2111, and is divided into an adhesive coating region 11 and a transition region 12 distributed along a circumferential direction X. The adhesive coating region 11 is provided with adhesive grooves 11111 configured to accommodate conductive adhesive. During processing of the electrode sheet 2111, the driving mechanism may drive the adhesive coating roller 10 to rotate such that the adhesive coating region 11 contacts the curved portion 21111 of the electrode sheet 2111 and the conductive adhesive in the adhesive grooves 11111 of the adhesive coating region 11 is roll-coated onto the curved portion 21111. In this way, conductive adhesive can be roll-coated onto the curved portion 21111, and the conductive adhesive can penetrate into the curved portion 21111, thereby improving the bonding force and flexibility of the curved portion 21111, alleviating the cracking problem of the curved portion 21111, and improving the reliability of the resulting battery 2000.

In addition, the arrangement of the adhesive coating roller 10 enables the adhesive coating roller 10 to roll-coat conductive adhesive onto the curved portion 21111 of the electrode sheet 2111 during rotation, such that the adhesive coating operation of the electrode sheet 2111 is simple, easy to implement, time-saving and labor-saving, thereby improving the processing efficiency of the battery 2000.

It should be noted here that after the electrode sheet processing device 100 roll-coats conductive adhesive onto the curved portion 21111 of the electrode sheet 2111, the conductive adhesive is solidified on the curved portion 21111 to form an adhesive layer 21113, so as to obtain the electrode sheet 2111 shown in FIG. 3.

In some embodiments, reference is collectively made to FIG. 5 to FIG. 9 in conjunction with other accompanying drawings. The adhesive coating region 11 is provided with an anilox pattern 1111, and the anilox pattern 1111 defines a plurality of adhesive grooves 11111.

The anilox pattern 1111, also known as mesh pattern, check pattern, or grid pattern, is formed by an arrangement of dots, lines, and combinations of dots and lines having certain shapes and sizes according to a predetermined manner. The pattern design of the anilox pattern 1111 resembles a fishing net.

The anilox pattern 1111 includes anilox walls 11112 and anilox cells, and an anilox wall 11112 is provided between adjacent anilox cells. It may be understood that the anilox wall 11112 is pattern lines of the anilox pattern 1111, and the anilox wall 11112 defines an anilox cell. The anilox cell is the adhesive groove 11111.

The anilox pattern 1111 may be formed in the adhesive coating region 11 by various means, including but not limited to engraving.

By adopting the above technical solution, the plurality of adhesive grooves 11111 defined by the anilox pattern 1111 are configured to accommodate conductive adhesive. In this way, the anilox walls 11112 of the anilox pattern 1111 can provide a certain degree of confinement on the conductive adhesive in the adhesive grooves 11111, which can alleviate the problem of the conductive adhesive in the adhesive grooves 11111 being ejected during rotation of the adhesive coating roller 10, thereby improving the adhesive coating effect on the curved portion 21111, so as to alleviate the cracking problem of the curved portion 21111.

The adhesive grooves 11111 may be of various shapes. In some embodiments, as shown in FIG. 8, the adhesive grooves 11111 are polygonal, for example, a regular hexagon, square, or other shapes. In other embodiments, as shown in FIG. 9, the adhesive grooves 11111 are circular.

In some embodiments, reference is collectively made to FIG. 5 to FIG. 7 in conjunction with other accompanying drawings. The electrode sheet processing device 100 further includes a material storage bin 20, and the material storage bin 20 is configured to store the conductive adhesive. At least part of the adhesive coating roller 10 is located within the material storage bin 20 such that the adhesive grooves 11111 pick up the conductive adhesive from the material storage bin 20.

The material storage bin 20 refers to a containment structure configured to store conductive adhesive.

At least part of the adhesive coating roller 10 being located within the material storage bin 20 may mean that part of the adhesive coating roller 10 is located within the material storage bin 20, or that the adhesive coating roller 10 is completely located within the material storage bin 20. Part of the adhesive coating roller 10 is located below a liquid level of the material storage bin 20, and part of the adhesive coating roller 10 is located above the liquid level of the material storage bin 20.

In this way, during rotation of the adhesive coating roller 10, the adhesive coating region 11 may be rotated to a position below the liquid level of the material storage bin 20, such that the adhesive grooves 11111 of the adhesive coating region 11 pick up conductive adhesive from the material storage bin 20. After taking the conductive adhesive, the adhesive coating region 11 may be rotated to the first side 101, that is, rotated to a position above the liquid level of the material storage bin 20, to contact the curved portion 21111 of the electrode sheet 2111, so as to roll-coat the conductive adhesive in the adhesive grooves 11111 onto the curved portion 21111. In this way, the adhesive coating region 11 is configured to roll-coat the conductive adhesive in the material storage bin 20 onto the curved portion 21111.

In addition, the arrangement of the material storage bin 20 enables the adhesive coating roller 10 to pick up conductive adhesive during rotation and roll-coat conductive adhesive onto the curved portion 21111 of the electrode sheet 2111, which can simplify the processing operation of the electrode sheet 2111 and improve the processing efficiency of the electrode sheet 2111, so as to improve the processing efficiency of the battery 2000.

In some embodiments, reference is collectively made to FIG. 5 to FIG. 7 in conjunction with other accompanying drawings. The adhesive coating roller 10 is provided with a first side 101 and a second side 102 opposite to each other along a first direction Z, and the first direction Z intersects the axial direction Y. The adhesive coating roller 10 is configured to contact the electrode sheet 2111 at the first side 101. At least part of the material storage bin 20 is disposed at the second side 102. The electrode sheet processing device 100 further includes a scraping member 30, and the scraping member 30 is disposed on a path along which the outer peripheral wall of the adhesive coating roller 10 rotates from the second side 102 towards the first side 101, and is configured to abut against the outer peripheral wall of the adhesive coating roller 10. The adhesive coating roller 10 is configured to rotate relative to the scraping member 30.

The first side 101 refers to a position of the adhesive coating roller 10 configured to contact the electrode sheet 2111, and the second side 102 refers to a position opposite to the first side 101. Both the first side 101 and the second side 102 may be substantially virtual positions that do not change with rotation of the adhesive coating roller 10. Accordingly, the first direction Z is a general distribution direction of the first side 101 and the second side 102.

The adhesive coating roller 10 is configured to contact the electrode sheet 2111 at the first side 101, such that the adhesive coating region 11 of the adhesive coating roller 10 may contact the curved portion 21111 of the electrode sheet 2111 at the first side 101, and the transition region 12 of the adhesive coating roller 10 may contact the flat portion 21112 of the electrode sheet 2111 at the first side 101.

At least part of the material storage bin 20 is disposed at the second side 102, and at least part of the outer peripheral wall of the adhesive coating roller 10 is located within the material storage bin 20, such that in the first direction Z, at least part of the adhesive coating roller 10 away from the first side 101 is located within the material storage bin 20. Specifically, in the first direction Z, the material storage bin 20 is provided with an opening 201 on a side facing the adhesive coating roller 10, and at least part of the adhesive coating roller 10 away from the first side 101 extends into the material storage bin 20 through the opening 201, where part of the adhesive coating roller 10 away from the first side 101 is located below the liquid level of the material storage bin 20, and part of the adhesive coating roller 10 near the first side 101 is located above the liquid level of the material storage bin 20.

A scraping member 30 refers to a component configured to scrape off the conductive adhesive on the outer peripheral wall of the adhesive coating roller 10 at positions other than the adhesive grooves 11111. The scraping member 30 may be, but is not limited to, a silicone component or a rubber component. The positions on the outer peripheral wall of the adhesive coating roller 10 other than the adhesive grooves 11111 include the transition region 12, and may further include positions on the adhesive coating region 11 other than the adhesive grooves 11111.

The scraping member 30 being disposed on a path along which the outer peripheral wall of the adhesive coating roller 10 rotates from the second side 102 towards the first side 101 means that in the first direction Z, the scraping member 30 is located between the first side 101 and the second side 102 and disposed on a path along which the outer peripheral wall of the adhesive coating roller 10 rotates from the second side 102 to the first side 101. In this way, the adhesive coating region 11 and the transition region 12 of the adhesive coating roller 10 may sequentially rotate to the second side 102, the scraping member 30, and the first side 101.

In an example, as shown in FIG. 5 and FIG. 6, in the first direction Z, the material storage bin 20 is disposed at the second side 102 of the adhesive coating roller 10, part of the adhesive coating roller 10 close to the second side 102 is located within the material storage bin 20, and part of the adhesive coating roller 10 close to the first side 101 is located outside the material storage bin 20, such that the first side 101 is a side of the adhesive coating roller 10 away from the material storage bin 20 along the first direction Z. Further, the scraping member 30 is disposed between the material storage bin 20 and the first side 101 and disposed on the path along which the adhesive coating roller 10 rotates from the second side 102 to the first side 101.

By adopting the above technical solution, during rotation of the adhesive coating roller 10, the adhesive coating region 11 of the adhesive coating roller 10 may be first rotated to the second side 102, so as to be rotated to a position below the liquid level of the material storage bin 20, such that the adhesive grooves 11111 of the adhesive coating region 11 pick up the conductive adhesive in the material storage bin 20. Then, the adhesive coating region 11 of the adhesive coating roller 10 rotates to the scraping member 30; and subsequently, the adhesive coating region 11 of the adhesive coating roller 10 rotates to the first side 101, thereby contacting the electrode sheet 2111 at the first side 101, so as to roll-coat the conductive adhesive onto the curved portion 21111 of the electrode sheet 2111. During the process in which the adhesive grooves 11111 of the adhesive coating region 11 pick up the conductive adhesive and the adhesive coating region 11 rotates from the second side 102 to the first side 101, the adhesive coating roller 10 moves relative to the scraping member 30, enabling the scraping member 30 to scrape off the conductive adhesive on the outer peripheral wall of the adhesive coating roller 10 at positions other than the adhesive grooves 11111, such that no conductive adhesive is roll-coated onto the electrode sheet 2111 from portions of the outer peripheral wall of the adhesive coating roller 10 other than the adhesive grooves 11111. For example, when the transition region 12 of the adhesive coating roller 10 rotates to the first side 101, since conductive adhesive on the transition region 12 has been scraped off by the scraping member 30, the transition region 12 does not roll-coat conductive adhesive onto the flat portion 21112 when contacting the flat portion 21112 of the electrode sheet 2111.

In this way, it is possible to alleviate the problem that the outer peripheral wall of the adhesive coating roller 10 roll-coats conductive adhesive onto the curved portion 21111 and the flat portion 21112 of the electrode sheet 2111, which would otherwise increase volume and weight of the electrode sheet 2111, thereby helping to improve the energy density of the battery 2000.

In some embodiments, reference is collectively made to FIG. 5 to FIG. 7 in conjunction with other accompanying drawings. The electrode sheet processing device 100 further includes a pressing roller 40, an outer peripheral wall of the pressing roller 40 and the outer peripheral wall of the adhesive coating roller 10 are spaced apart to form a roll-coating gap 103 for the electrode sheet 2111 to pass through, and the adhesive coating region 11 is configured to cooperate with the pressing roller 40 to roll-coat conductive adhesive onto the electrode sheet 2111 passing through the roll-coating gap 103.

The pressing roller 40 refers to a roller-shaped structure configured to press the electrode sheet 2111 against the outer peripheral wall of the adhesive coating roller 10, so as to cooperate with the outer peripheral wall of the adhesive coating roller 10 to roll-coat the electrode sheet 2111.

The pressing roller 40 is disposed on one side of the adhesive coating roller 10 along a radial direction. The pressing roller 40 and the adhesive coating roller 10 are parallel to each other and spaced part in the radial direction of the adhesive coating roller 10, such that the outer peripheral wall of the pressing roller 40 and the outer peripheral wall of the adhesive coating roller 10 are spaced apart to form a roll-coating gap 103. Specifically, the pressing roller 40 is disposed at the first side 101 of the adhesive coating roller 10, and the outer peripheral wall of the pressing roller 40 and the outer peripheral wall of the adhesive coating roller 10 are spaced apart at the first side 101 to form the roll-coating gap 103.

Specifically, the adhesive coating region 11 is configured to cooperate with the pressing roller 40 to roll-coat conductive adhesive onto the curved portion 21111 passing through the roll-coating gap 103.

By adopting the above technical solution, when the electrode sheet 2111 is conveyed to the first side 101, the electrode sheet 2111 passes through the roll-coating gap 103, and the pressing roller 40 presses the electrode sheet 2111 at the roll-coating gap 103 against the outer peripheral wall of the adhesive coating roller 10, such that the adhesive coating roller 10 and the pressing roller 40 jointly roll and press the electrode sheet 2111. Based on this, when the curved portion 21111 of the electrode sheet 2111 is conveyed to the first side 101, the curved portion 21111 passes through the roll-coating gap 103, passes around and contacts the adhesive coating region 11 of the adhesive coating roller 10, and is pressed between the adhesive coating region 11 and the outer peripheral wall of the pressing roller 40, thereby improving the roll-coating effect of conductive adhesive onto the curved portion 21111 by the adhesive coating region 11, so as to alleviate the cracking problem of the electrode sheet 2111.

In some embodiments, the pressing roller 40 is configured to rotate, and a rotation axis of the pressing roller 40 is parallel to the first axis L. Accordingly, when the electrode sheet 2111 is conveyed to the first side 101 and passes through the roll-coating gap 103, the pressing roller 40 may rotate with the electrode sheet 2111, thereby improving the flexibility of conveying the electrode sheet 2111 and the flexibility of roll-coating conductive adhesive onto the curved portion 21111 of the electrode sheet 2111 by the electrode sheet processing device 100.

The rotation direction of the pressing roller 40 may be opposite to the rotation direction of the adhesive coating roller 10.

In some embodiments, reference is collectively made to FIG. 5 to FIG. 7 in conjunction with other accompanying drawings. The adhesive coating region 11 includes at least one set of adhesive coating portions 111, the adhesive grooves 11111 are disposed on the adhesive coating portion 111, and each set of adhesive coating portions 111 extends along the axial direction Y of the adhesive coating roller 10.

The adhesive coating portion 111 refers to a part of the adhesive coating region 11 configured to roll-coat conductive adhesive onto the curved portion 21111.

One set of adhesive coating portions 111 may include at least one adhesive coating portion 111. When one set of adhesive coating portions 111 includes one adhesive coating portion 111, the adhesive coating portion 111 of the set of adhesive coating portions 111 extends along the axial direction Y. When one set of adhesive coating portions 111 includes a plurality of adhesive coating portions 111, the plurality of adhesive coating portions 111 of the set are distributed along the axial direction Y, such that the set of adhesive coating portions 111 extends along the axial direction Y.

The electrode sheet 2111 is substantially square-shaped, and has a length direction and a width direction. The length direction of the electrode sheet 2111 is substantially consistent with a conveying direction of the electrode sheet 2111 at the roll-coating gap 103, and the width direction of the electrode sheet 2111 is perpendicular to the length direction of the electrode sheet 2111 and parallel to the axial direction Y.

By arranging each set of adhesive coating portions 111 to extend along the axial direction Y, each set of adhesive coating portions 111 may roll-coat conductive adhesive onto a relatively large area of the curved portion 21111 along its width direction, thereby better alleviating the cracking problem of the curved portion 21111.

In some embodiments, the width of the adhesive coating portion 111 along the circumferential direction X ranges from 3 mm to 12 mm, and may specifically be 3 mm, 4 mm, 5 mm, 6 mm, 7 mm, 8 mm, 9 mm, 10 mm, 11 mm, 12 mm, or the like.

With such an arrangement, the adhesive coating portion 111 may roll-coat a relatively wide layer of conductive adhesive onto the curved portion 21111, thereby helping to improve the problem of electrode sheet 2111 cracking.

In some embodiments, a depth of the adhesive groove 11111 along a radial direction ranges from 30 µm to 180 µm, and may specifically be 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, or the like.

With such an arrangement, a depth of the adhesive groove 11111 along the radial direction is appropriate, such that the adhesive grooves 11111 can both accommodate conductive adhesive and facilitate roll-coating of conductive adhesive onto the curved portion 21111 by the adhesive groove 11111, thereby helping the electrode sheet processing device 100 to roll-coat conductive adhesive onto the curved portion 21111, so as to improve the problem of electrode sheet 2111 cracking.

In some embodiments, reference is made to FIG. 5 in conjunction with other accompanying drawings. When the adhesive coating portions 111 are provided in a plurality of sets, the plurality of sets of adhesive coating portions 111 are spaced apart along the circumferential direction X.

With such an arrangement, the adhesive coating region 11 includes a plurality of sets of adhesive coating portions 111, such that the plurality of sets of adhesive coating portions 111 of the adhesive coating region 11 can respectively roll-coat conductive adhesive onto a plurality of positions of the curved portion 21111 along the circumferential direction X. In this way, the cracking problem of the curved portion 21111 can be alleviated, and usage of conductive adhesive can be reduced, thereby helping to improve the energy density of the battery 2000.

In some embodiments, the driving mechanism is configured to respectively adjust the rotation speed of the adhesive coating roller 10 when the adhesive coating region 11 contacts the electrode sheet 2111 and when the transition region 12 contacts the electrode sheet 2111.

Specifically, the driving mechanism is configured to respectively adjust the rotation speed of the adhesive coating roller 10 when the adhesive coating region 11 contacts the curved portion 21111 and when the transition region 12 contacts the flat portion 21112.

By adopting the above technical solution, when the transition region 12 contacts the flat portion 21112 of the electrode sheet 2111, the driving mechanism can adjust the rotation speed of the adhesive coating roller 10, such that the transition region 12 can provide buffering transition for the flat portion 21112, thereby facilitating subsequent contact of the adhesive coating region 11 with the curved portion 21111 of the electrode sheet 2111. When the adhesive coating region 11 contacts the curved portion 21111, the driving mechanism can adjust the rotation speed of the adhesive coating roller 10, that is, adjust the rotational linear speed of the adhesive coating region 11, thereby enabling the adhesive coating region 11 to stably roll-coat conductive adhesive onto the curved portion 21111 and facilitating the subsequent contact of the transition region 12 with the flat portion 21112.

Such an arrangement facilitates the transition region 12 to contact the flat portion 21112 of the electrode sheet 2111, and facilitates the adhesive coating region 11 to contact the curved portion 21111 of the electrode sheet 2111, so as to roll-coat conductive adhesive onto the curved portion 21111.

During a process in which the adhesive coating region 11 contacts the curved portion 21111 of the electrode sheet 2111, the rotation speed of the adhesive coating roller 10 may be the same as or different from the conveying speed of the electrode sheet 2111. During a process in which the transition region 12 contacts the flat portion 21112 of the electrode sheet 2111, the rotation speed of the adhesive coating roller 10 may be the same as or different from the conveying speed of the electrode sheet 2111.

During a process in which the adhesive coating region 11 contacts different curved portions 21111, the rotation speed of the adhesive coating roller 10 may be the same or different. In an example where the conveying speed is constant, during the process in which the adhesive coating region 11 contacts different curved portions 21111, the rotation speed of the adhesive coating roller 10 may be different, such that the adhesive coating region 11 may contact curved portions 21111 of different lengths.

During a process in which the transition region 12 contacts different flat portions 21112, the rotation speed of the adhesive coating roller 10 may be the same or different. In an example where the conveying speed is constant, during a process in which the transition region 12 contacts different flat portions 21112, the rotation speed of the adhesive coating roller 10 may be different, such that the transition region 12 may contact flat portions 21112 of different lengths.

It should be noted first that the rotation cycle of the adhesive coating roller 10 refers to a time required for the adhesive coating roller 10 to complete one rotation cycle, that is, a time required for the adhesive coating roller 10 to rotate by 360°. Specifically, the rotation cycle of the adhesive coating roller 10 may be defined as a time period from when the adhesive coating region 11 starts to rotate at the first side 101 until it returns to the first side 101.

In some embodiments, reference is collectively made to FIG. 5 to FIG. 7 in conjunction with other accompanying drawings. The adhesive coating region 11 is configured to contact the curved portion 21111 of the electrode sheet 2111, and the transition region 12 is configured to contact the flat portion 21112 of the electrode sheet 2111. The adhesive coating roller 10 includes one adhesive coating region 11 and one transition region 12, and the adhesive coating region 11 and the transition region 12 are distributed along the circumferential direction X.

In some possible designs, in each rotation cycle of the adhesive coating roller 10, the adhesive coating region 11 is configured to contact each curved portion 21111.

It may be understood that each time the adhesive coating roller 10 completes one rotation cycle, the adhesive coating region 11 rotates to the first side 101 once and contacts one curved portion 21111 of the electrode sheet 2111, so as to roll-coat conductive adhesive onto the curved portion 21111.

Specifically, during operation of the electrode sheet processing device 100, the adhesive coating roller 10 first completes a first rotation cycle, and the adhesive coating region 11 may rotate to the first side 101 for a first time and contacts a first curved portion 21111 of the electrode sheet 2111, so as to roll-coat conductive adhesive onto the first curved portion 21111 of the electrode sheet 2111. Then, the adhesive coating roller 10 completes a second rotation cycle, and the adhesive coating region 11 may rotate to the first side 101 for a second time. Before the adhesive coating region 11 rotates to the first side 101 for the second time, the transition region 12 contacts the flat portion 21112. When the adhesive coating region 11 rotates to the first side 101 for the second time, the adhesive coating region 11 contacts the second curved portion 21111 of the electrode sheet 2111, so as to roll-coat conductive adhesive onto the second curved portion 21111 of the electrode sheet 2111. Then, the adhesive coating roller 10 completes a third rotation cycle, and the adhesive coating region 11 may rotate to the first side 101 for a third time. Before the adhesive coating region 11 rotates to the first side 101 for the third time, the transition region 12 contacts the flat portion 21112. When the adhesive coating region 11 rotates to the first side 101 for the third time, the adhesive coating region 11 contacts the third curved portion 21111 of the electrode sheet 2111, so as to roll-coat conductive adhesive onto the third curved portion 21111 of the electrode sheet 2111, ......, and so on. In this way, in each rotation cycle of the adhesive coating roller 10, the adhesive coating region 11 is configured to contact a corresponding one of the curved portions 21111 to roll-coat conductive adhesive onto respective curved portions 21111, such that the adhesive coating region 11 of the adhesive coating roller 10 may sequentially roll-coat conductive adhesive onto a plurality of curved portions 21111 of the electrode sheet 2111.

The driving mechanism is configured to drive the adhesive coating roller 10 to rotate. Specifically, the driving mechanism is configured to drive the adhesive coating region 11 to contact a corresponding curved portion 21111 in each rotation cycle of the adhesive coating roller 10, and to drive the transition region 12 to contact a corresponding flat portion 21112 in each rotation cycle of the adhesive coating roller 10.

In other possible designs, over a plurality of rotation cycles of the adhesive coating roller 10, the adhesive coating region 11 is configured to sequentially contact a plurality of positions of the curved portion 21111, and the transition region 12 is further configured to contact partial positions of the curved portion 21111.

It may be understood that, during operation of the electrode sheet processing device 100, the adhesive coating roller 10 first completes a first rotation cycle, and the adhesive coating region 11 may rotate to the first side 101 for a first time and contacts a first position of the curved portion 21111 of the electrode sheet 2111, so as to roll-coat conductive adhesive onto the first position of the curved portion 21111. Then, the adhesive coating roller 10 completes a second rotation cycle, and the adhesive coating region 11 may rotate to the first side 101 for a second time. Before the adhesive coating region 11 rotates to the first side 101 for the second time, the transition region 12 rotates to the first side 101, so as to contact partial positions of the curved portion 21111. When the adhesive coating region 11 rotates to the first side 101 for the second time, the adhesive coating region 11 contacts the second position of the curved portion 21111, so as to roll-coat conductive adhesive onto the second position of the curved portion 21111. Then, the adhesive coating roller 10 completes a third rotation cycle, and the adhesive coating region 11 may rotate to the first side 101 for a third time. Before the adhesive coating region 11 rotates to the first side 101 for the third time, the transition region 12 rotates to the first side 101, so as to contact partial positions of the curved portion 21111. When the adhesive coating region 11 rotates to the first side 101 for the third time, the adhesive coating region 11 contacts the third position of the curved portion 21111, so as to roll-coat conductive adhesive onto the third position of the curved portion 21111, ......, and so on. In this way, over a plurality of rotation cycles of the adhesive coating roller 10, the adhesive coating region 11 sequentially contacts a plurality of positions of the curved portion 21111, so as to intermittently roll-coat conductive adhesive onto the curved portion 21111.

After the adhesive coating region 11 completes roll-coating conductive adhesive onto one of the curved portions 21111, the transition region 12 may rotate to the first side 101, so as to contact the flat portion 21112 of the electrode sheet 2111. Then, the adhesive coating region 11 may contact a first position of a next curved portion 21111, so as to roll-coat conductive adhesive onto the first position of the next curved portion 21111. Then, the adhesive coating region 11 may contact a second position of the next curved portion 21111, ......, and so on.

The driving mechanism is configured to drive the adhesive coating roller 10 to rotate. Specifically, the driving mechanism is configured to, over a plurality of rotation cycles of the adhesive coating roller 10, drive the adhesive coating region 11 to sequentially contact a plurality of positions of the curved portion 21111, and drive the transition region 12 to contact partial positions of the curved portion 21111. The driving mechanism is further configured to, in some rotation cycles of the adhesive coating roller 10, drive the transition region 12 to contact the flat portion 21112 of the electrode sheet 2111.

During a process in which the adhesive coating region 11 contacts different positions of the curved portion 21111, the rotation speed of the adhesive coating roller 10 may be the same or different.

During a process in which the transition region 12 contacts different positions of the curved portion 21111, the rotation speed of the adhesive coating roller 10 may be the same or different.

The rotation speed of the adhesive coating roller 10 when the transition region 12 contacts the flat portion 21112 may be the same as or different from the rotation speed of the adhesive coating roller 10 when the transition region 12 contacts the curved portion 21111. In an example where the conveying speed of the electrode sheet 2111 is constant, the rotation speed of the adhesive coating roller 10 when the transition region 12 contacts the flat portion 21112 is lower than the rotation speed of the adhesive coating roller 10 when the transition region 12 contacts the curved portion 21111, such that the transition region 12 may contact the flat portion 21112, and may also contact partial positions of the curved portion 21111.

By adopting the above technical solution, the adhesive coating region 11 may roll-coat conductive adhesive onto each curved portion 21111, so as to roll-coat conductive adhesive onto a plurality of curved portions 21111. Further, in some cases, the adhesive coating region 11 can also roll-coat conductive adhesive onto a plurality of positions of the curved portion 21111.

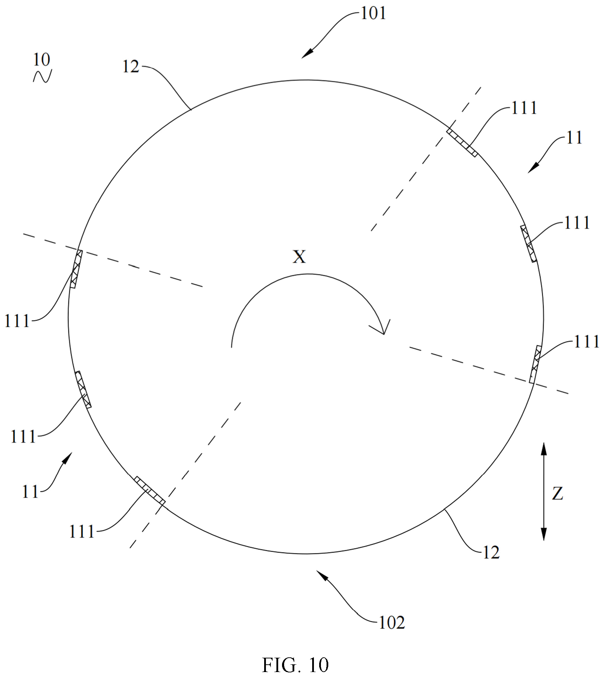

In some embodiments, reference is made to FIG. 10 in conjunction with other accompanying drawings. FIG. 10 is a schematic diagram of an adhesive coating roller 10 of an electrode sheet processing device 100 according to still other embodiments of the present application, and in FIG. 10, the adhesive coating region 11 are separated from the transition region 12 of the adhesive coating roller 10 by dashed lines. The adhesive coating region 11 is configured to contact the curved portion 21111 of the electrode sheet 2111, and the transition region 12 is configured to contact the flat portion 21112 of the electrode sheet 2111. The adhesive coating roller 10 includes a plurality of adhesive coating regions 11 and a plurality of transition regions 12, and the adhesive coating regions 11 and the transition regions 12 are alternately distributed along the circumferential direction X.

The adhesive coating regions 11 and the transition regions 12 being alternately distributed along the circumferential direction X means that the plurality of adhesive coating regions 11 and the plurality of transition regions 12 are distributed along the circumferential direction X in an alternating sequence of adhesive coating region 11 and transition region 12.

In some possible designs, in each rotation cycle of the adhesive coating roller 10, the plurality of adhesive coating regions 11 are configured to respectively contact a plurality of curved portions 21111.

It may be understood that, during operation of the electrode sheet processing device 100, the adhesive coating roller 10 completes a first rotation cycle, and the plurality of adhesive coating regions 11 of the adhesive coating roller 10 may sequentially rotate to the first side 101, so as to respectively contact a plurality of curved portions 21111. Specifically, within the first rotation cycle of the adhesive coating roller 10, the first adhesive coating region 11 of the adhesive coating roller 10 may first rotate to the first side 101 and contact a first curved portion 21111 of the electrode sheet 2111, so as to roll-coat conductive adhesive onto the first curved portion 21111 of the electrode sheet 2111. Before a second adhesive coating region 11 rotates to the first side 101, the transition region 12 between the first adhesive coating region 11 and the second adhesive coating region 11 rotates to the first side 101, so as to contact the flat portion 21112. When the second adhesive coating region 11 rotates to the first side 101, the second adhesive coating region 11 contacts the second curved portion 21111 of the electrode sheet 2111, so as to roll-coat conductive adhesive onto the second curved portion 21111. Before a third adhesive coating region 11 rotates to the first side 101, the transition region 12 between the second adhesive coating region 11 and the third adhesive coating region 11 rotates to the first side 101, so as to contact the flat portion 21112. When the third adhesive coating region 11 rotates to the first side 101, the third adhesive coating region 11 contacts the third curved portion 21111 of the electrode sheet 2111, so as to roll-coat conductive adhesive onto the third curved portion 21111, ......, and so on. In this way, in one rotation cycle of the adhesive coating roller 10, the plurality of adhesive coating regions 11 respectively roll-coat conductive adhesive onto a plurality of curved portions 21111.

In some cases, after the adhesive coating roller 10 completes a first rotation cycle, and the plurality of adhesive coating regions 11 of the adhesive coating roller 10 sequentially rotate to the first side 101 to respectively roll-coat conductive adhesive onto a plurality of curved portions 21111, the operation of roll-coating conductive adhesive onto the electrode sheet 2111 may be completed.

Alternatively, in other cases, the adhesive coating roller 10 needs to complete a second rotation cycle, a third rotation cycle, ......, and so on. For example, in rotation cycles other than the first rotation cycle of the adhesive coating roller 10, the plurality of adhesive coating regions 11 may sequentially rotate to the first side 101 to respectively contact a plurality of curved portions 21111. The same process as in the first rotation cycle of the adhesive coating roller 10 is applied, and details are not repeated herein.

The driving mechanism is configured to drive the adhesive coating roller 10 to rotate. Specifically, the driving mechanism is configured to, in each rotation cycle of the adhesive coating roller 10, drive the plurality of adhesive coating regions 11 of the adhesive coating roller 10 to respectively contact a plurality of curved portions 21111, and drive the plurality of transition regions 12 of the adhesive coating roller 10 to respectively contact a plurality of flat portions 21112.

In other possible designs, in each rotation cycle of the adhesive coating roller 10, the plurality of adhesive coating regions 11 are configured to sequentially contact a plurality of positions of the curved portion 21111, and the transition region 12 is further configured to contact partial positions of the curved portion 21111.

It may be understood that, for each rotation cycle of the adhesive coating roller 10, the plurality of adhesive coating regions 11 of the adhesive coating roller 10 may sequentially rotate to the first side 101 to sequentially contact a plurality of positions of the curved portion 21111, so as to intermittently roll-coat conductive adhesive onto a plurality of positions of one curved portion 21111.

During operation of the electrode sheet processing device 100, the adhesive coating roller 10 completes a first rotation cycle, and the first adhesive coating region 11 of the adhesive coating roller 10 may first rotate to the first side 101 and contact a first position of the first curved portion 21111 of the electrode sheet 2111, so as to roll-coat conductive adhesive onto the first position of the first curved portion 21111. Then, a second adhesive coating region 11 of the adhesive coating roller 10 may rotate to the first side 101. Before the second adhesive coating region 11 rotates to the first side 101, the transition region 12 between the first adhesive coating region 11 and the second adhesive coating region 11 rotates to the first side 101, so as to contact partial positions of the first curved portion 21111. When the second adhesive coating region 11 rotates to the first side 101, the second adhesive coating region 11 contacts a second position of the first curved portion 21111, so as to roll-coat conductive adhesive onto the second position of the first curved portion 21111. Then, a third adhesive coating region 11 of the adhesive coating roller 10 may rotate to the first side 101. Before the third adhesive coating region 11 rotates to the first side 101, the transition region 12 between the second adhesive coating region 11 and the third adhesive coating region 11 contacts partial positions of the first curved portion 21111. When the third adhesive coating region 11 rotates to the first side 101, the third adhesive coating region 11 contacts a third position of the first curved portion 21111, ......, and so on. In this way, in the first rotation cycle of the adhesive coating roller 10, the plurality of adhesive coating regions 11 of the adhesive coating roller 10 sequentially contact a plurality of positions of the first curved portion 21111, so as to intermittently roll-coat conductive adhesive onto the first curved portion 21111.

Then, the adhesive coating roller 10 completes a second rotation cycle, and the first adhesive coating region 11 of the adhesive coating roller 10 may first rotate to the first side 101; before the first adhesive coating region 11 of the adhesive coating roller 10 rotates to the first side 101, one of the transition regions 12 of the adhesive coating roller 10 contacts the flat portion 21112. When the first adhesive coating region 11 of the adhesive coating roller 10 rotates to the first side 101, the first adhesive coating region 11 of the adhesive coating roller 10 may contact the first position of the second curved portion 21111 of the electrode sheet 2111, so as to roll-coat conductive adhesive onto the first position of the second curved portion 21111. Then, the second adhesive coating region 11 of the adhesive coating roller 10 may rotate to the first side 101; before the second adhesive coating region 11 rotates to the first side 101, the transition region 12 between the first adhesive coating region 11 and the second adhesive coating region 11 rotates to the first side 101, so as to contact partial positions of the second curved portion 21111. When the second adhesive coating region 11 rotates to the first side 101, the second adhesive coating region 11 contacts the second position of the second curved portion 21111, so as to roll-coat conductive adhesive onto the second position of the second curved portion 21111, ......, and so on. In this way, in the second rotation cycle of the adhesive coating roller 10, the plurality of adhesive coating regions 11 of the adhesive coating roller 10 sequentially contact a plurality of positions of the second curved portion 21111, so as to intermittently roll-coat conductive adhesive onto the second curved portion 21111.

Then, the adhesive coating roller 10 completes a third rotation cycle, ......, and so on.

The driving mechanism is configured to drive the adhesive coating roller 10 to rotate. Specifically, the driving mechanism is configured to, in each rotation cycle of the adhesive coating roller 10, drive the plurality of adhesive coating regions 11 of the adhesive coating roller 10 to respectively contact a plurality of positions of the curved portion 21111, and drive the transition region 12 of the adhesive coating roller 10 to contact the flat portion 21112.

During the process in which the adhesive coating region 11 contacts different positions of the curved portion 21111, the rotation speed of the adhesive coating roller 10 may be the same or different.

During the process in which the transition region 12 contacts different positions of the curved portion 21111, the rotation speed of the adhesive coating roller 10 may be the same or different.

The rotation speed of the adhesive coating roller 10 when the transition region 12 contacts the flat portion 21112 may be the same as or different from the rotation speed of the adhesive coating roller 10 when the transition region 12 contacts the curved portion 21111. In an example where the conveying speed of the electrode sheet 2111 is constant, the rotation speed of the adhesive coating roller 10 when the transition region 12 contacts the flat portion 21112 is lower than the rotation speed of the adhesive coating roller 10 when the transition region 12 contacts the curved portion 21111, such that the transition region 12 may contact the flat portion 21112, and may also contact partial positions of the curved portion 21111.

By adopting the above technical solution, the plurality of adhesive coating regions 11 of the adhesive coating roller 10 may cooperate to roll-coat conductive adhesive onto a plurality of curved portions 21111. Further, in some cases, the plurality of adhesive coating regions 11 of the adhesive coating roller 10 may cooperate to roll-coat conductive adhesive onto a plurality of positions of the curved portion 21111.

In some embodiments, the electrode sheet processing device 100 further includes a drying mechanism, and the drying mechanism is configured to dry the conductive adhesive on the electrode sheet 2111.

The drying mechanism refers to a mechanism configured to dry the electrode sheet 2111.

Specifically, the drying mechanism is configured to dry the conductive adhesive on the curved portion 21111 of the electrode sheet 2111.

By adopting the above technical solution, during operation of the processing device, the electrode sheet 2111 may contact the adhesive coating roller 10, such that the adhesive coating roller 10 roll-coats conductive adhesive onto the curved portion 21111 of the electrode sheet 2111; then, the electrode sheet 2111 may pass through the drying mechanism, such that the conductive adhesive on the curved portion 21111 penetrates into the curved portion 21111.

With such an arrangement, the conductive adhesive may better penetrate into the curved portion 21111, so as to improve the flexibility and bonding ability of the curved portion 21111, thereby helping to alleviate the cracking problem of the curved portion 21111.

In some embodiments, the electrode sheet processing device 100 may further include a coating mechanism and a second drying mechanism. The above drying mechanism is a first drying mechanism.

The coating mechanism is configured to apply active material onto a current collector, so as to form the electrode sheet 2111.

The second drying mechanism is configured to dry the coated electrode sheet 2111, such that the active material is fixed on the current collector.

The adhesive coating roller 10 is configured to roll-coat conductive adhesive onto the electrode sheet 2111 output from the second drying mechanism.

Reference is made to FIG. 4 in conjunction with other accompanying drawings. The battery processing system 1000 provided in the embodiments of the present application includes an electrode sheet processing device 100. The electrode sheet processing device 100 in these embodiments is the same as the electrode sheet processing device 100 in the previous embodiment, for details, reference may be made to the relevant description of the electrode sheet processing device 100 in the previous embodiment, and details are not repeated herein.

The battery processing system 1000 provided in the embodiments of the present application, by adopting the electrode sheet processing device 100 involved above, may roll-coat conductive adhesive onto the curved portion 21111 of the electrode sheet 2111. In this way, the conductive adhesive can penetrate into the curved portion 21111, so as to improve the bonding force and flexibility of the curved portion 21111, thereby alleviating the cracking problem of the curved portion 21111 and improving the reliability of the obtained battery 2000.

In some embodiments, reference is made to FIG. 4 in conjunction with other accompanying drawings. The battery processing system 1000 further includes a winding device 200 and an assembly device 300. The winding device 200 is configured to wind the electrode sheet 2111 to form an electrode assembly 2110, and the assembly device 300 is configured to assemble the electrode assembly 2110 into a battery 2000.

The winding device 200 refers to a device configured to wind the electrode sheet 2111 to form an electrode assembly 2110.

The assembly device 300 refers to a device configured to assemble the electrode assembly 2110 into a battery 2000.

By adopting the above technical solution, the electrode sheet processing device 100 first roll-coats conductive adhesive onto the curved portion 21111 of the electrode sheet 2111, then the winding device 200 winds the electrode sheet 2111 roll-coated with conductive adhesive to form an electrode assembly 2110, and then the assembly device 300 assembles the electrode assembly 2110 to form a battery 2000.

With such an arrangement, the cracking problem of the curved portion 21111 of the electrode sheet 2111 is alleviated during the assembly of the battery 2000, thereby improving the reliability of the battery 2000.

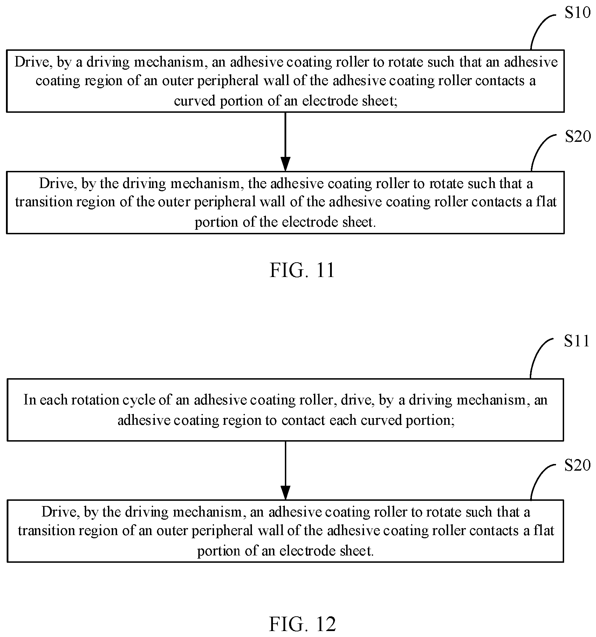

Reference is made to FIG. 11 in conjunction with other accompanying drawings. FIG. 11 is a method flowchart of an electrode sheet 2111 processing method according to some embodiments of the present application. The electrode sheet 2111 processing method provided in these embodiments of the present application is applied to an electrode sheet processing device 100. The electrode sheet processing device 100 in the embodiments is the same as the electrode sheet processing device 100 in the previous embodiment, for details, reference may be made to the relevant description of the electrode sheet processing device 100 in the previous embodiment, and details are not repeated herein.

As shown in FIG. 11, the electrode sheet 2111 processing method provided in the embodiments of the present application includes the following steps.

S10: Drive, by a driving mechanism, an adhesive coating roller 10 to rotate such that an adhesive coating region 11 of an outer peripheral wall of the adhesive coating roller 10 contacts a curved portion 21111 of an electrode sheet 2111.

Specifically, by driving the adhesive coating roller 10 to rotate, the adhesive coating region 11 may contact the curved portion 21111 of the electrode sheet 2111 at the first side 101, such that the conductive adhesive on the adhesive coating region 11 may be roll-coated onto the curved portion 21111.

S20: Drive, by the driving mechanism, the adhesive coating roller 10 to rotate such that a transition region 12 of the outer peripheral wall of the adhesive coating roller 10 contacts a flat portion 21112 of the electrode sheet 2111.

Specifically, by driving the adhesive coating roller 10 to rotate, the transition region 12 may contact the flat portion 21112 of the electrode sheet 2111 at the first side 101.

The transition region 12 contacting the flat portion 21112 of the electrode sheet 2111 may be used to transition the flat portion 21112, which facilitates the next curved portion 21111 of the electrode sheet 2111 to contact the adhesive coating region 11, so as to be roll-coated with conductive adhesive through the adhesive coating region 11.

In the electrode sheet 2111 processing method provided in the embodiments of the present application, the adhesive coating region 11 of the adhesive coating roller 10 is driven to contact the curved portion 21111 of the electrode sheet 2111 during processing of the electrode sheet 2111, so as to roll-coat conductive adhesive onto the curved portion 21111. In this way, the conductive adhesive can penetrate into the curved portion 21111, so as to improve the bonding force and flexibility of the curved portion 21111, thereby alleviating the cracking problem of the curved portion 21111 and improving the reliability of the obtained battery 2000.

In some embodiments, reference is made to FIG. 12 in conjunction with FIG. 5 to FIG. 7 and other accompanying drawings. FIG. 12 is a method flowchart of an electrode sheet 2111 processing method according to other embodiments of the present application. The adhesive coating roller 10 includes one adhesive coating region 11 and one transition region 12.

The step S10 of driving, by a driving mechanism, an adhesive coating roller 10 to rotate such that an adhesive coating region 11 of an outer peripheral wall of the adhesive coating roller 10 contacts a curved portion 21111 of the electrode sheet 2111 includes the following step:
S11: In each rotation cycle of the adhesive coating roller 10, drive, by the driving mechanism, the adhesive coating region 11 to contact each curved portion 21111.

It may be understood that, during operation of the electrode sheet processing device 100, the adhesive coating roller 10 may first be driven to complete a first rotation cycle, and the adhesive coating region 11 may rotate to the first side 101 for a first time and contact the first curved portion 21111 of the electrode sheet 2111, so as to roll-coat conductive adhesive onto the first curved portion 21111 of the electrode sheet 2111. Then, the adhesive coating roller 10 is driven to complete a second rotation cycle, and the adhesive coating region 11 may rotate to the first side 101 for a second time. Before the adhesive coating region 11 rotates to the first side 101 for the second time, the transition region 12 contacts the flat portion 21112. When the adhesive coating region 11 rotates to the first side 101 for the second time, the adhesive coating region 11 contacts the second curved portion 21111 of the electrode sheet 2111, so as to roll-coat conductive adhesive onto the second curved portion 21111 of the electrode sheet 2111. Then, the adhesive coating roller 10 is driven to complete a third rotation cycle, and the adhesive coating region 11 may rotate to the first side 101 for a third time. Before the adhesive coating region 11 rotates to the first side 101 for the third time, the transition region 12 contacts the flat portion 21112. When the adhesive coating region 11 rotates to the first side 101 for the third time, the adhesive coating region 11 contacts the third curved portion 21111 of the electrode sheet 2111, so as to roll-coat conductive adhesive onto the third curved portion 21111 of the electrode sheet 2111, ......, and so on. In this way, in each rotation cycle of the adhesive coating roller 10, the adhesive coating region 11 may contact a corresponding one of the curved portions 21111 to roll-coat conductive adhesive onto respective curved portions 21111, such that the adhesive coating region 11 of the adhesive coating roller 10 may sequentially roll-coat conductive adhesive onto a plurality of curved portions 21111 of the electrode sheet 2111.

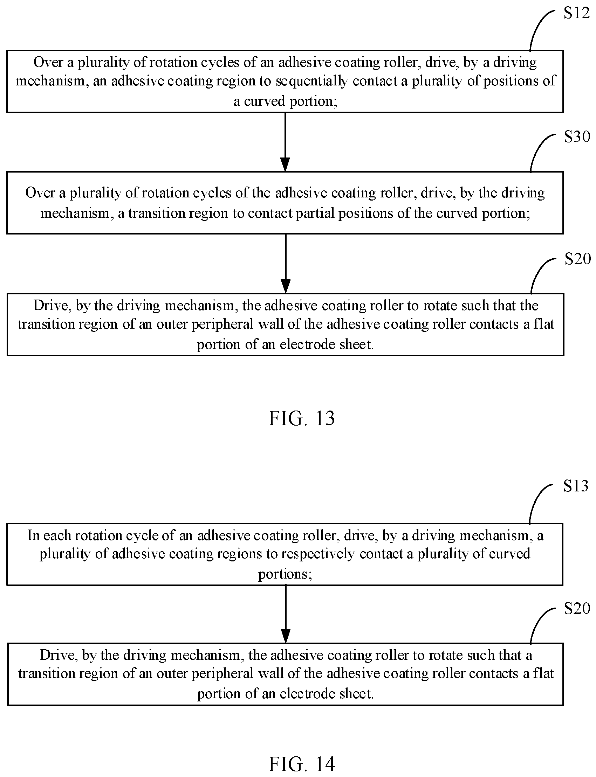

In some embodiments, reference is made to FIG. 13 in conjunction with FIG. 5 to FIG. 7 and other accompanying drawings. FIG. 13 is a method flowchart of an electrode sheet 2111 processing method according to still other embodiments of the present application. The adhesive coating roller 10 includes one adhesive coating region 11 and one transition region 12.

The step S10 of driving, by a driving mechanism, an adhesive coating roller 10 to rotate such that an adhesive coating region 11 of an outer peripheral wall of the adhesive coating roller 10 contacts a curved portion 21111 of the electrode sheet 2111 includes the following step:
S12: Over a plurality of rotation cycles of the adhesive coating roller 10, drive, by the driving mechanism, the adhesive coating region 11 to sequentially contact a plurality of positions of the curved portion 21111.

In this way, over a plurality of rotation cycles of the adhesive coating roller 10, the adhesive coating region 11 may sequentially contact a plurality of positions of the curved portion 21111, so as to intermittently roll-coat conductive adhesive onto the curved portion 21111.

The electrode sheet 2111 processing method further includes the following step:
S30: Over a plurality of rotation cycles of the adhesive coating roller 10, drive, by the driving mechanism, the transition region 12 to contact partial positions of the curved portion 21111.

It may be understood that, after the adhesive coating region 11 contacts one position of the curved portion 21111 to roll-coat conductive adhesive onto one position of the curved portion 21111 and before the adhesive coating region 11 contacts another position of the curved portion 21111, a transition region 12 may be driven to contact partial positions of the curved portion 21111, thereby facilitating the adhesive coating region 11 to contact another position of the curved portion 21111.

It may be understood that, during operation of the electrode sheet processing device 100, the adhesive coating roller 10 may first be driven to complete a first rotation cycle, such that the adhesive coating region 11 rotates to the first side 101 for a first time and contacts a first position of the curved portion 21111 of the electrode sheet 2111, so as to roll-coat conductive adhesive onto the first position of the curved portion 21111. Then, the adhesive coating roller 10 is driven to complete a second rotation cycle, and the adhesive coating region 11 rotates to the first side 101 for a second time. Before the adhesive coating region 11 rotates to the first side 101 for the second time, the transition region 12 rotates to the first side 101, so as to contact partial positions of the curved portion 21111. When the adhesive coating region 11 rotates to the first side 101 for the second time, the adhesive coating region 11 contacts the second position of the curved portion 21111, so as to roll-coat conductive adhesive onto the second position of the curved portion 21111. Then, the adhesive coating roller 10 is driven to complete a third rotation cycle, and the adhesive coating region 11 may rotate to the first side 101 for a third time. Before the adhesive coating region 11 rotates to the first side 101 for the third time, the transition region 12 rotates to the first side 101, so as to contact partial positions of the curved portion 21111. When the adhesive coating region 11 rotates to the first side 101 for the third time, the adhesive coating region 11 contacts the third position of the curved portion 21111, so as to roll-coat conductive adhesive onto the third position of the curved portion 21111, ......, and so on. In this way, over a plurality of rotation cycles of the adhesive coating roller 10, the adhesive coating region 11 sequentially contacts a plurality of positions of the curved portion 21111 to intermittently roll-coat conductive adhesive onto the curved portion 21111.

After the adhesive coating region 11 completes roll-coating conductive adhesive onto one of the curved portions 21111, the transition region 12 may be driven to rotate to the first side 101, so as to contact the flat portion 21112 of the electrode sheet 2111. Then, the adhesive coating region 11 is driven to contact a first position of a next curved portion 21111, so as to roll-coat conductive adhesive onto the first position of the next curved portion 21111. Then, the adhesive coating region 11 is driven to contact a second position of the next curved portion 21111, ......, and so on.

With such an arrangement, over a plurality of rotation cycles of the adhesive coating roller 10, the adhesive coating region 11 may sequentially contact a plurality of positions of the curved portion 21111, so as to intermittently roll-coat conductive adhesive onto a plurality of positions of the curved portion 21111. In addition, the adhesive coating region 11 may roll-coat conductive adhesive onto a plurality of curved portions 21111.

In some embodiments, reference is made to FIG. 14 in conjunction with FIG. 10 and other accompanying drawings. FIG. 14 is a method flowchart of an electrode sheet 2111 processing method according to yet other embodiments of the present application. The adhesive coating roller 10 includes a plurality of adhesive coating regions 11 and a plurality of transition regions 12, and the adhesive coating regions 11 and the transition regions 12 are alternately distributed along the circumferential direction X.

The step S10 of driving, by a driving mechanism, an adhesive coating roller 10 to rotate such that an adhesive coating region 11 of an outer peripheral wall of the adhesive coating roller 10 contacts a curved portion 21111 of the electrode sheet 2111 includes the following step:
S13: In each rotation cycle of the adhesive coating roller 10, drive, by the driving mechanism, the plurality of adhesive coating regions 11 to respectively contact a plurality of curved portions 21111.

It may be understood that, during operation of the electrode sheet processing device 100, the adhesive coating roller 10 may first be driven to complete a first rotation cycle, such that the plurality of adhesive coating regions 11 of the adhesive coating roller 10 sequentially rotate to the first side 101, so as to respectively contact a plurality of curved portions 21111. Specifically, within the first rotation cycle of the adhesive coating roller 10, the first adhesive coating region 11 of the adhesive coating roller 10 may first rotate to the first side 101 and contact the first curved portion 21111 of the electrode sheet 2111, so as to roll-coat conductive adhesive onto the first curved portion 21111 of the electrode sheet 2111. Before a second adhesive coating region 11 rotates to the first side 101, the transition region 12 between the first adhesive coating region 11 and the second adhesive coating region 11 rotates to the first side 101, so as to contact the flat portion 21112. When the second adhesive coating region 11 rotates to the first side 101, the second adhesive coating region 11 contacts the second curved portion 21111 of the electrode sheet 2111, so as to roll-coat conductive adhesive onto the second curved portion 21111. Before a third adhesive coating region 11 rotates to the first side 101, the transition region 12 between the second adhesive coating region 11 and the third adhesive coating region 11 rotates to the first side 101, so as to contact the flat portion 21112. When the third adhesive coating region 11 rotates to the first side 101, the third adhesive coating region 11 contacts the third curved portion 21111 of the electrode sheet 2111, so as to roll-coat conductive adhesive onto the third curved portion 21111, ......, and so on. In this way, in one rotation cycle of the adhesive coating roller 10, the plurality of adhesive coating regions 11 respectively roll-coat conductive adhesive onto a plurality of curved portions 21111.

In some cases, after the adhesive coating roller 10 is driven to complete a first rotation cycle, and the plurality of adhesive coating regions 11 of the adhesive coating roller 10 sequentially rotate to the first side 101 to respectively roll-coat conductive adhesive onto a plurality of curved portions 21111, the operation of roll-coating conductive adhesive onto the electrode sheet 2111 may be completed. Or, in other cases, the adhesive coating roller 10 may also be driven to complete a second rotation cycle, a third rotation cycle, ......., and so on. For example, within rotation cycles other than the first rotation cycle of the adhesive coating roller 10, the plurality of adhesive coating regions 11 of the adhesive coating roller 10 may sequentially rotate to the first side 101 to respectively contact a plurality of curved portions 21111. The same process as in the first rotation cycle of the adhesive coating roller 10 is applied, and details are not repeated herein.

With such an arrangement, in each rotation cycle of the adhesive coating roller 10, a plurality of adhesive coating regions 11 may respectively contact a plurality of curved portions 21111, so as to roll-coat conductive adhesive onto a plurality of curved portions 21111. That is, the plurality of adhesive coating regions 11 of the adhesive coating roller 10 may cooperate to roll-coat conductive adhesive onto a plurality of curved portions 21111.

In some embodiments, the adhesive coating roller 10 includes a plurality of adhesive coating regions 11 and a plurality of transition regions 12, and the adhesive coating regions 11 and the transition regions 12 are alternately distributed along the circumferential direction X.

The step S10 of driving, by a driving mechanism, an adhesive coating roller 10 to rotate such that an adhesive coating region 11 of an outer peripheral wall of the adhesive coating roller 10 contacts a curved portion 21111 of the electrode sheet 2111 includes the following step:
S14: In each rotation cycle of the adhesive coating roller 10, drive, by the driving mechanism, the plurality of adhesive coating regions 11 to sequentially contact a plurality of positions of the curved portion 21111;

The electrode sheet 2111 processing method further includes:
S40: In each rotation cycle of the adhesive coating roller 10, drive, by the driving mechanism, the transition region 12 to contact partial positions of the curved portion 21111.

It may be understood that, after the adhesive coating region 11 contacts one position of the curved portion 21111 to roll-coat conductive adhesive onto one position of the curved portion 21111 and before the adhesive coating region 11 contacts another position of the curved portion 21111, a transition region 12 may be driven to contact partial positions of the curved portion 21111, thereby facilitating the adhesive coating region 11 to contact another position of the curved portion 21111.

It may be understood that, for each rotation of the adhesive coating roller 10, the plurality of adhesive coating regions 11 of the adhesive coating roller 10 may sequentially rotate to the first side 101 to sequentially contact a plurality of positions of the curved portion 21111, so as to intermittently roll-coat conductive adhesive onto a plurality of positions of one curved portion 21111.

During operation of the electrode sheet processing device 100, the adhesive coating roller 10 may be driven to complete a first rotation cycle, such that a first adhesive coating region 11 of the adhesive coating roller 10 first rotates to the first side 101 and contacts a first position of a first curved portion 21111 of the electrode sheet 2111, so as to roll-coat conductive adhesive onto the first position of the first curved portion 21111. Then, a second adhesive coating region 11 of the adhesive coating roller 10 is driven to rotate to the first side 101. Before the second adhesive coating region 11 rotates to the first side 101, the transition region 12 between the first adhesive coating region 11 and the second adhesive coating region 11 rotates to the first side 101, so as to contact partial positions of the first curved portion 21111. When the second adhesive coating region 11 rotates to the first side 101, the second adhesive coating region 11 contacts the second position of the first curved portion 21111, so as to roll-coat conductive adhesive onto the second position of the first curved portion 21111. Then, a third adhesive coating region 11 of the adhesive coating roller 10 is driven to rotate to the first side 101. Before the third adhesive coating region 11 rotates to the first side 101, the transition region 12 between the second adhesive coating region 11 and the third adhesive coating region 11 contacts partial positions of the first curved portion 21111. When the third adhesive coating region 11 rotates to the first side 101, the third adhesive coating region 11 contacts the third position of the first curved portion 21111, ......, and so on. In this way, in the first rotation cycle of the adhesive coating roller 10, the plurality of adhesive coating regions 11 of the adhesive coating roller 10 sequentially contact a plurality of positions of the first curved portion 21111, so as to intermittently roll-coat conductive adhesive onto the first curved portion 21111.

Then, the adhesive coating roller 10 is driven to complete a second rotation cycle, such that a first adhesive coating region 11 of the adhesive coating roller 10 may first rotate to the first side 101. Before the first adhesive coating region 11 of the adhesive coating roller 10 rotates to the first side 101, one of the transition regions 12 of the adhesive coating roller 10 contacts the flat portion 21112. When the first adhesive coating region 11 of the adhesive coating roller 10 rotates to the first side 101, the first adhesive coating region 11 of the adhesive coating roller 10 may contact the first position of the second curved portion 21111 of the electrode sheet 2111, so as to roll-coat conductive adhesive onto the first position of the second curved portion 21111. Then, a second adhesive coating region 11 of the adhesive coating roller 10 may rotate to the first side 101. Before the second adhesive coating region 11 rotates to the first side 101, the transition region 12 between the first adhesive coating region 11 and the second adhesive coating region 11 rotates to the first side 101, so as to contact partial positions of the second curved portion 21111. When the second adhesive coating region 11 rotates to the first side 101, the second adhesive coating region 11 contacts the second position of the second curved portion 21111, so as to roll-coat conductive adhesive onto the second position of the second curved portion 21111, ......, and so on. In this way, in the second rotation cycle of the adhesive coating roller 10, the plurality of adhesive coating regions 11 of the adhesive coating roller 10 sequentially contact a plurality of positions of the second curved portion 21111, so as to intermittently roll-coat conductive adhesive onto the second curved portion 21111.

Then, the adhesive coating roller 10 is driven to complete a third rotation cycle, ......, and so on.

With such an arrangement, in each rotation cycle of the adhesive coating roller 10, a plurality of adhesive coating regions 11 may sequentially contact a plurality of positions of the curved portion 21111, so as to roll-coat conductive adhesive onto a plurality of positions of the curved portion 21111. That is, the plurality of adhesive coating regions 11 of the adhesive coating roller 10 may cooperate to roll-coat conductive adhesive onto a plurality of curved portions 21111. In addition, the plurality of adhesive coating regions 11 of the adhesive coating roller 10 may cooperate to roll-coat conductive adhesive onto a plurality of positions of the curved portion 21111.

In some embodiments, the step S10 of driving, by a driving mechanism, an adhesive coating roller 10 to rotate such that an adhesive coating region 11 of an outer peripheral wall of the adhesive coating roller 10 contacts a curved portion 21111 of the electrode sheet 2111 includes the following step:
S15: Drive, by the driving mechanism, the adhesive coating roller 10 to rotate such that the adhesive coating region 11 contacts the curved portion 21111, and a rotation speed of the adhesive coating roller 10 is the same as a conveying speed of the curved portion 21111.

That is, when the adhesive coating region 11 contacts the curved portion 21111, the rotational linear speed of the adhesive coating roller 10 is set to be the same as the conveying speed of the curved portion 21111.

It may be understood that, when the curved portion 21111 is conveyed to the first side 101 to contact the adhesive coating region 11, the rotational linear speed of the adhesive coating roller 10 is the same as the conveying speed of the curved portion 21111.

In this way, during the process in which the curved portion 21111 contacts the adhesive coating region 11, the adhesive coating region 11 may move synchronously with the curved portion 21111, which facilitates the adhesive coating region 11 to roll-coat conductive adhesive onto the curved portion 21111 of the electrode sheet 2111, thereby improving the roll-coating effect of conductive adhesive onto the curved portion 21111 by the adhesive coating region 11, so as to alleviate the cracking problem of the curved portion 21111.

In some embodiments, after the step S10 of driving, by a driving mechanism, an adhesive coating roller 10 to rotate such that an adhesive coating region 11 of an outer peripheral wall of the adhesive coating roller 10 contacts a curved portion 21111 of the electrode sheet 2111, and before the step S20 of driving, by the driving mechanism, the adhesive coating roller 10 to rotate such that the transition region 12 of the outer peripheral wall of the adhesive coating roller 10 contacts the flat portion 21112 of the electrode sheet, the method further includes the following step:
S40: Drive, by the driving mechanism, the adhesive coating region 11 to contact part of the flat portion 21112.

It may be understood that the adhesive coating region 11 is not only configured to contact the curved portion 21111, but also configured to contact part of the flat portion 21112. Accordingly, the transition region 12 is configured to contact part of the curved portion 21111.

Specifically, on the basis of the above embodiments, after the adhesive coating region 11 contacts the curved portion 21111 to roll-coat conductive adhesive onto the curved portion 21111 and before the transition region 12 contacts the flat portion 21112, the adhesive coating region 11 continues to contact part of the flat portion 21112, so as to roll-coat conductive adhesive onto the part of the flat portion 21112.

That is, after the curved portion 21111 of the electrode sheet 2111 passes around and contacts the adhesive coating region 11, part of the flat portion 21112 of the electrode sheet 2111 passes around and contacts the adhesive coating region 11, and the remaining part of the flat portion 21112 of the electrode sheet 2111 passes around and contacts the transition region 12.

With such an arrangement, both the connection position between the curved portion 21111 and the flat portion 21112, and the curved portion 21111 can be roll-coated with conductive adhesive by the adhesive coating region 11, thereby effectively alleviating the problem of electrode sheet 2111 cracking.

In some embodiments, the step S10 of driving, by a driving mechanism, an adhesive coating roller 10 to rotate such that an adhesive coating region 11 of an outer peripheral wall of the adhesive coating roller 10 contacts a curved portion 21111 of the electrode sheet 2111 includes the following step:
S16: Drive, by the driving mechanism, the adhesive coating region 11 to contact 1 to 5 curved portions 21111 in a portion of the electrode sheet 2111 corresponding to each electrode assembly 2110.

The electrode sheet 2111 includes a plurality of portions, and each portion corresponds to each electrode assembly 2110.

By adopting the above technical solution, the first to third curved portions 21111, or the first to fourth curved portions 21111, or the first to fifth curved portions 21111 of the electrode sheet 2111 of the electrode assembly 2110 can be roll-coated with conductive adhesive, thereby alleviating the problem of electrode sheet 2111 cracking and improving the reliability of the battery 2000.

Reference is collectively made to FIG. 1 to FIG. 3 in conjunction with other accompanying drawings. The battery 2000 provided in the embodiments of the present application includes an electrode sheet 2111, and the electrode sheet 2111 is obtained by processing using an electrode sheet processing device 100 or an electrode sheet 2111 processing method. The electrode sheet 2111 includes a flat portion 21112 and a curved portion 21111, and the curved portion 21111 is connected to the flat portion 21112. The curved portion 21111 is in a curved configuration, and the curved portion 21111 is provided with conductive adhesive. The electrode sheet processing device 100 and the electrode sheet 2111 processing method in these embodiments are the same as the electrode sheet processing device 100 and the electrode sheet 2111 processing method in the above embodiments, and for details, reference may be made to the relevant description of the electrode sheet processing device 100 and the electrode sheet 2111 processing method in the above embodiments, and details are not repeated herein.

In the battery 2000 provided in embodiments of the present application, the provision of conductive adhesive on the curved portion 21111 of the electrode sheet 2111 can effectively alleviate the cracking problem of the electrode sheet 2111 of the battery 2000, thereby improving the reliability of the battery 2000.

In one of the embodiments of the present application, as shown in FIG. 5 to FIG. 7, the electrode sheet processing device 100 includes an adhesive coating roller 10, a pressing roller 40, a material storage bin 20, and a scraping member 30. The outer peripheral wall of the adhesive coating roller 10 includes an adhesive coating region 11 and a transition region 12, where the adhesive coating region 11 and the transition region 12 are distributed along the circumferential direction X. The adhesive coating region 11 is provided with an anilox pattern 1111, and the anilox pattern 1111 defines adhesive grooves 11111 configured to accommodate conductive adhesive. The pressing roller 40 and the material storage bin 20 are respectively disposed on opposite sides of the adhesive coating roller 10. Both the adhesive coating roller 10 and the pressing roller 40 are configured to rotate, and a rotation axis of the adhesive coating roller 10 is parallel to a rotation axis of the pressing roller 40. The outer peripheral wall of the adhesive coating roller 10 and the outer peripheral wall of the pressing roller 40 are spaced apart to form a roll-coating gap 103, and the roll-coating gap 103 is configured for the electrode sheet 2111 to pass through. The adhesive coating region 11 is configured to contact the curved portion 21111 of the electrode sheet 2111 at the roll-coating gap 103, so as to roll-coat the conductive adhesive in the adhesive grooves 11111 onto the curved portion 21111. The transition region 12 is configured to contact the flat portion 21112 of the electrode sheet 2111 at the roll-coating gap 103. In the distribution direction of the pressing roller 40 and the material storage bin 20, part of the adhesive coating roller 10 is located below the liquid level of the material storage bin 20, and the remaining part is located above the liquid level of the material storage bin 20. In the distribution direction of the pressing roller 40 and the material storage bin 20, the scraping member 30 is disposed between the material storage bin 20 and the pressing roller 40 and disposed on the path along which the outer peripheral wall of the adhesive coating roller 10 rotates from the material storage bin 20 to the pressing roller 40, and abuts against the outer peripheral wall of the adhesive coating roller 10.

The above are only optional embodiments of the present application and are not intended to limit the present application. Various modifications and changes can be made to the present application by those skilled in the art. Any modification, equivalent replacement, improvement, or the like made within the spirit and principle of the present application, should be included within the scope of the claims of the present application.

## Claims

1. An electrode sheet processing device, comprising:
an adhesive coating roller, wherein an outer peripheral wall of the adhesive coating roller is configured to contact an electrode sheet; the outer peripheral wall of the adhesive coating roller comprises an adhesive coating region and a transition region distributed along a circumferential direction, the adhesive coating region is provided with adhesive grooves configured to accommodate conductive adhesive, and the adhesive coating region is configured to enable the conductive adhesive to be roll-coated onto the electrode sheet when contacting the electrode sheet; and
a driving mechanism, configured to drive the adhesive coating roller to rotate.

2. The electrode sheet processing device according to claim 1, wherein the adhesive coating region is provided with an anilox pattern, and the anilox pattern defines a plurality of the adhesive grooves.

3. The electrode sheet processing device according to claim 1 or 2, wherein the electrode sheet processing device further comprises a material storage bin configured to store the conductive adhesive, and at least part of the adhesive coating roller is located within the material storage bin, such that the adhesive grooves pick up the conductive adhesive from the material storage bin.

4. The electrode sheet processing device according to claim 3, wherein the adhesive coating roller is provided with a first side and a second side opposite to each other along a first direction, the first direction intersects an axial direction of the adhesive coating roller; the adhesive coating roller is configured to contact the electrode sheet at the first side, and at least part of the material storage bin is disposed at the second side; the electrode sheet processing device further comprises a scraping member, the scraping member is disposed on a path along which the outer peripheral wall of the adhesive coating roller rotates from the second side toward the first side, and is configured to abut against the outer peripheral wall of the adhesive coating roller; and the adhesive coating roller is configured to rotate relative to the scraping member.

5. The electrode sheet processing device according to any one of claims 1 to 4, wherein the electrode sheet processing device further comprises a pressing roller, an outer peripheral wall of the pressing roller and the outer peripheral wall of the adhesive coating roller are spaced apart to form a roll-coating gap for the electrode sheet to pass through, and the adhesive coating region is configured to cooperate with the pressing roller to roll-coat the conductive adhesive onto the electrode sheet passing through the roll-coating gap.

6. The electrode sheet processing device according to any one of claims 1 to 5, wherein the adhesive coating region comprises at least one set of adhesive coating portions, the adhesive grooves are disposed on the adhesive coating portion, and each set of adhesive coating portions extends along an axial direction of the adhesive coating roller; and
when the adhesive coating portions are provided in a plurality of sets, the plurality of sets of adhesive coating portions are spaced apart along the circumferential direction.

7. The electrode sheet processing device according to any one of claims 1 to 6, wherein the driving mechanism is configured to respectively adjust a rotation speed of the adhesive coating roller when the adhesive coating region contacts the electrode sheet and when the transition region contacts the electrode sheet.

8. The electrode sheet processing device according to any one of claims 1 to 7, wherein the adhesive coating region is configured to contact a curved portion of the electrode sheet, and the transition region is configured to contact a flat portion of the electrode sheet;
the adhesive coating roller comprises one adhesive coating region and one transition region; and
in each rotation cycle of the adhesive coating roller, the adhesive coating region is configured to contact each curved portion; or, over a plurality of rotation cycles of the adhesive coating roller, the adhesive coating region is configured to sequentially contact a plurality of positions of the curved portion, and the transition region is further configured to contact partial positions of the curved portion.

9. The electrode sheet processing device according to any one of claims 1 to 7, wherein the adhesive coating region is configured to contact a curved portion of the electrode sheet, and the transition region is configured to contact a flat portion of the electrode sheet;
the adhesive coating roller comprises a plurality of adhesive coating regions and a plurality of transition regions, and the adhesive coating regions and the transition regions are alternately distributed along the circumferential direction; and
in each rotation cycle of the adhesive coating roller, the plurality of adhesive coating regions are configured to respectively contact a plurality of curved portions; or, in each rotation cycle of the adhesive coating roller, the plurality of adhesive coating regions are configured to sequentially contact a plurality of positions of the curved portion, and the transition region is further configured to contact partial positions of the curved portion.

10. The electrode sheet processing device according to any one of claims 1 to 9, wherein the electrode sheet processing device further comprises a drying mechanism, and the drying mechanism is configured to dry the conductive adhesive on the electrode sheet.

11. A battery processing system, comprising the electrode sheet processing device according to any one of claims 1 to 10.

12. The battery processing system according to claim 11, wherein the battery processing system further comprises:
a winding device, configured to wind the electrode sheet to form an electrode assembly; and
an assembly device, configured to assemble the electrode assembly into a battery.

13. An electrode sheet processing method, applied to the electrode sheet processing device according to any one of claims 1 to 10, wherein the electrode sheet processing method comprises:
driving, by a driving mechanism, an adhesive coating roller to rotate such that an adhesive coating region of an outer peripheral wall of the adhesive coating roller contacts a curved portion of an electrode sheet; and
driving, by the driving mechanism, the adhesive coating roller to rotate such that a transition region of the outer peripheral wall of the adhesive coating roller contacts a flat portion of the electrode sheet.

14. The electrode sheet processing method according to claim 13, wherein the adhesive coating roller comprises one adhesive coating region and one transition region; and the driving, by a driving mechanism, an adhesive coating roller to rotate such that an adhesive coating region of an outer peripheral wall of the adhesive coating roller contacts a curved portion of the electrode sheet comprises:
in each rotation cycle of the adhesive coating roller, driving, by the driving mechanism, the adhesive coating region to contact each curved portion.

15. The electrode sheet processing method according to claim 13, wherein the adhesive coating roller comprises one adhesive coating region and one transition region; and the driving, by a driving mechanism, an adhesive coating roller to rotate such that an adhesive coating region of an outer peripheral wall of the adhesive coating roller contacts a curved portion of the electrode sheet comprises:
over a plurality of rotation cycles of the adhesive coating roller, driving, by the driving mechanism, the adhesive coating region to sequentially contact the plurality of positions of the curved portion; and
the electrode sheet processing method further comprises:
over a plurality of rotation cycles of the adhesive coating roller, driving, by the driving mechanism, the transition region to contact partial positions of the curved portion.

16. The electrode sheet processing method according to claim 13, wherein the adhesive coating roller comprises a plurality of adhesive coating regions and a plurality of transition regions, and the adhesive coating regions and the transition regions are alternately distributed along the circumferential direction; and the driving, by a driving mechanism, an adhesive coating roller to rotate such that an adhesive coating region of an outer peripheral wall of the adhesive coating roller contacts a curved portion of the electrode sheet comprises:
in each rotation cycle of the adhesive coating roller, driving, by the driving mechanism, the plurality of adhesive coating regions to respectively contact a plurality of curved portions.

17. The electrode sheet processing method according to claim 13, wherein the adhesive coating roller comprises a plurality of adhesive coating regions and a plurality of transition regions, and the adhesive coating regions and the transition regions are alternately distributed along the circumferential direction; driving, by a driving mechanism, an adhesive coating roller to rotate such that an adhesive coating region of an outer peripheral wall of the adhesive coating roller contacts a curved portion of the electrode sheet comprises:
in each rotation cycle of the adhesive coating roller, driving, by the driving mechanism, the plurality of adhesive coating regions to sequentially contact a plurality of positions of the curved portion; and
the electrode sheet processing method further comprises:
in each rotation cycle of the adhesive coating roller, driving, by the driving mechanism, the transition region to contact partial positions of the curved portion.

18. The electrode sheet processing method according to any one of claims 13 to 17, wherein driving, by a driving mechanism, an adhesive coating roller to rotate such that an adhesive coating region of an outer peripheral wall of the adhesive coating roller contacts a curved portion of the electrode sheet comprises:
driving, by the driving mechanism, the adhesive coating roller to rotate such that the adhesive coating region contacts the curved portion, and a rotational linear speed of the adhesive coating roller is the same as a conveying speed of the curved portion.

19. The electrode sheet processing method according to any one of claims 13 to 17, wherein after the driving, by a driving mechanism, an adhesive coating roller to rotate such that an adhesive coating region of an outer peripheral wall of the adhesive coating roller contacts a curved portion of the electrode sheet, and before the driving, by the driving mechanism, the adhesive coating roller to rotate such that the transition region of the outer peripheral wall of the adhesive coating roller contacts the flat portion of the electrode sheet, the method further comprises:
driving, by the driving mechanism, the adhesive coating region to contact part of the flat portion.

20. The electrode sheet processing method according to any one of claims 13 to 19, wherein the driving, by a driving mechanism, an adhesive coating roller to rotate such that an adhesive coating region of an outer peripheral wall of the adhesive coating roller contacts a curved portion of the electrode sheet comprises:
driving, by the driving mechanism, the adhesive coating region to contact 3 to 5 curved portions in a portion of the electrode sheet corresponding to each electrode assembly.

21. A battery, comprising an electrode sheet, wherein the electrode sheet is obtained by processing using the electrode sheet processing device according to any one of claims 1 to 10 or the electrode sheet processing method according to any one of claims 13 to 20; and the electrode sheet comprises a flat portion and a curved portion connected to the flat portion, the curved portion being in a curved configuration, and the curved portion being provided with conductive adhesive.
